# EUROPEAN PATENT SPECIFICATION

(11) **EP 4 373 181 B1**
(45) Date of publication and mention of the grant of the patent: **02.09.2026**
(21) Application number: 22842465.1
(22) Date of filing: 13.07.2022
(51) Int. Cl.: H04W 4/40, H04W 72/02, H04W 76/14, H04W 76/28, H04W 72/40, H04W 72/25

(54) **METHOD AND APPARATUS FOR SELECTING RESOURCE ON BASIS OF PARTIAL SENSING UNDER SL DRX OPERATION IN NR V2X**
VERFAHREN UND VORRICHTUNG ZUR AUSWAHL EINER RESSOURCE AUF BASIS VON PARTIELLER ERFASSUNG UNTER SL-DRX-BETRIEB IN NR V2X
PROCÉDÉ ET APPAREIL DE SÉLECTION DE RESSOURCE SUR LA BASE D'UNE DÉTECTION PARTIELLE SOUS UNE OPÉRATION DE DRX DE SL DANS UNE V2X NR

(30) Priority: 15.07.2021 KR 20210092763; 16.07.2021 KR 20210093673; 16.07.2021 KR 20210093705; 23.07.2021 KR 20210096886; 24.09.2021 KR 20210126172; 24.09.2021 KR 20210126174; 07.10.2021 KR 20210133431; 08.10.2021 KR 20210133981; 23.12.2021 KR 20210185984
(43) Date of publication of application: 22.05.2024
(73) Proprietor: LG Electronics Inc., Yeongdeungpo-gu Seoul 07336 (KR)
(72) Inventor: KO, Woosuk, Seoul 06772 (KR); SEO, Hanbyul, Seoul 06772 (KR); LEE, Seungmin, Seoul 06772 (KR); HWANG, Daesung, Seoul 06772 (KR)
(74) Representative: Plasseraud IP
(86) International application number: PCT/KR2022/010229
(87) International publication number: WO 2023/287203

(56) References cited:
- WO-A1-2021/002723
- WO-A1-2021/107574
- US-A1- 2018 042 023
- US-A1- 2021 144 736
- LG ELECTRONICS: "Discussion on resource allocation for power saving", vol. RAN WG1, no. e-Meeting; 20210519 - 20210527, 12 May 2021 (2021-05-12), XP052011282, Retrieved from the Internet <URL:https://ftp.3gpp.org/tsg_ran/WG1_RL1/TSGR1_105-e/Docs/R1-2105204.zip R1-2105204 Discussion on resource allocation for power saving.docx> [retrieved on 20210512]
- FUJITSU: "Considerations on Partial Sensing and DRX in NR V2X", vol. RAN WG1, no. e-Meeting; 20210125 - 20210205, 18 January 2021 (2021-01-18), XP051970498, Retrieved from the Internet <URL:https://ftp.3gpp.org/tsg_ran/WG1_RL1/TSGR1_104-e/Docs/R1-2100745.zip R1-2100745 Considerations on partial sensing and DRX in NR V2X.docx> [retrieved on 20210118]
- VIVO: "Resource allocation for sidelink power saving", vol. RAN WG1, no. e-Meeting; 20210125 - 20210205, 25 January 2021 (2021-01-25), XP051975892, Retrieved from the Internet <URL:https://ftp.3gpp.org/tsg_ran/WG1_RL1/TSGR1_104-e/Docs/R1-2101790.zip R1-2101790 Resource allocation for sidelink power saving.docx> [retrieved on 20210125]
- LENOVO ET AL: "DRX Configuration for UC BC GC and its interaction with Sensing", vol. RAN WG2, no. electronic; 20210519 - 20210527, 10 May 2021 (2021-05-10), XP052003773, Retrieved from the Internet <URL:https://ftp.3gpp.org/tsg_ran/WG2_RL2/TSGR2_114-e/Docs/R2-2105073.zip R2-2105073 DRX Configuration for UC BC GC and its interaction with Sensing.doc> [retrieved on 20210510]
- FUJITSU: "Considerations on partial sensing and DRX in NR Sidelink", 3GPP DRAFT; R1-2105066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 11 May 2021 (2021-05-11), Mobile Competence Centre ; 650, route des Lucioles ; F-06921 Sophia-Antipolis Cedex ; France , XP052006311
- LG ELECTRONICS: "Discussion on resource allocation for power saving", 3GPP DRAFT; R1-2103378, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210412 - 20210420, 7 April 2021 (2021-04-07), Mobile Competence Centre ; 650, route des Lucioles ; F-06921 Sophia-Antipolis Cedex ; France, XP052178121

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

The prior-art 3GPP contribution R1-2105204 titled "Discussion on resource allocation for power saving" discloses a method for resource allocation for sidelink using power saving techniques such as DRX and congestion control using CBR measurements over RX-UE's SL-DRX ON duration or active time.

### DISCLOSURE

### TECHNICAL SOLUTION

According to an embodiment of the present disclosure, a method for performing, by a first device, wireless communication is proposed. The method comprises:
obtaining information related to a resource pool; obtaining a sidelink, SL, discontinuous reception, DRX, configuration related to a second device; triggering resource selection for an initial transmission resource and at least one retransmission resource, in the resource pool; determining a resource selection window for the resource selection; measuring channel busy ratio, CBR, for the resource pool; determining a number of resources to be included within a time interval during which a first timer related to an active time, included in the SL DRX configuration is running, based on the CBR; and selecting the initial transmission resource and the at least one retransmission resource in the resource selection window, based on the number of the resources to be included within the time interval during which the first timer related to an active time is running.

According to an embodiment of the present disclosure, a first device for performing wireless communication is proposed. The first device comprises: one or more memories storing instructions; and may comprises one or more transceivers controlled by one or more processors; and comprises one or more processors connected to the one or more memories. The one or more processors execute the instructions to: obtain information related to a resource pool; obtain a sidelink, SL, discontinuous reception, DRX, configuration related to a second device; trigger resource selection for an initial transmission resource and at least one retransmission resource, in the resource pool; determine a resource selection window for the resource selection; measuring channel busy ratio, CBR, for the resource pool; determine a number of resources to be included within a time interval during which a first timer related to an active time, included in the SL DRX configuration is running, based on the CBR; and select the initial transmission resource and the at least one retransmission resource in the resource selection window, based on the number of the resources to be included within the time interval during which the first timer related to an active time is running.

According to an embodiment of the present disclosure, not claimed, a device adapted to control a first user equipment, UE, may be proposed. For example, the device may comprise: one or more processors; and one or more memories operably connectable to the one or more processors and storing instructions may be proposed. For example, the one or more processors may execute the instructions to: obtain information related to a resource pool; obtain a sidelink, SL, discontinuous reception, DRX, configuration related to a second UE; trigger resource selection for an initial transmission resource and at least one retransmission resource, in the resource pool; determine a resource selection window for the resource selection; measuring channel busy ratio, CBR, for the resource pool; determine a number of resources to be included within a time interval during which a first timer related to an active time, included in the SL DRX configuration is running, based on the CBR; and select the initial transmission resource and the at least one retransmission resource in the resource selection window, based on the number of the resources to be included within the time interval during which the first timer related to an active time is running.

According to an embodiment of the present disclosure, not claimed, a non-transitory computer-readable storage medium storing instructions may be proposed. For example, when executed, the instructions may cause a first device to: obtain information related to a resource pool; obtain a sidelink, SL, discontinuous reception, DRX, configuration related to a second device; trigger resource selection for an initial transmission resource and at least one retransmission resource, in the resource pool; determine a resource selection window for the resource selection; measuring channel busy ratio, CBR, for the resource pool; determine a number of resources to be included within a time interval during which a first timer related to an active time, included in the SL DRX configuration is running, based on the CBR; and select the initial transmission resource and the at least one retransmission resource in the resource selection window, based on the number of the resources to be included within the time interval during which the first timer related to an active time is running.

According to an embodiment of the present disclosure, not claimed, a method for performing, by a second device, wireless communication may be proposed. For example, the method may comprise: obtaining information related to a resource pool; obtaining a sidelink, SL, discontinuous reception, DRX, configuration for performing SL communication; starting a first timer related to an active time, of the SL DRX configuration; receiving, from a first device, first sidelink control information, SCI, for scheduling of a physical sidelink shared channel, PSSCH, through a physical sidelink control channel, PSCCH, based on the first timer being running and an initial transmission resource; receiving, from the second device, a medium access control (MAC) protocol data unit (PDU) and second SCI, based on the first timer being running and the initial transmission resource; and starting a second timer related to an active time, of the SL DRX configuration based on the second SCI, wherein the initial transmission resource and at least one retransmission resource may be selected based on a number of resources to be included within a time interval during which the first timer is running, and wherein the number of resources to be included within the time interval during which the first timer is running may be determined based on channel busy ratio, CBR, for the resource pool.

According to an embodiment of the present disclosure, not claimed, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain information related to a resource pool; obtain a sidelink, SL, discontinuous reception, DRX, configuration for performing SL communication; start a first timer related to an active time, of the SL DRX configuration; receive, from a first device, first sidelink control information, SCI, for scheduling of a physical sidelink shared channel, PSSCH, through a physical sidelink control channel, PSCCH, based on the first timer being running and an initial transmission resource; receive, from the first device, a medium access control (MAC) protocol data unit (PDU) and second SCI, based on the first timer being running and the initial transmission resource; and start a second timer related to an active time, of the SL DRX configuration based on the second SCI, wherein the initial transmission resource and at least one retransmission resource may be selected based on a number of resources to be included within a time interval during which the first timer is running, and wherein the number of resources to be included within the time interval during which the first timer is running may be determined based on channel busy ratio, CBR, for the resource pool.

### ADVANTAGEOUS EFFECTS

The user equipment (UE) may efficiently perform SL communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a transmission resource being selected from an active time based on a CBR, according to one embodiment of the present disclosure.
FIG. 9 shows a transmission resource selected based on the ratio of the length of the resource selection window to the on-duration timer running interval, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

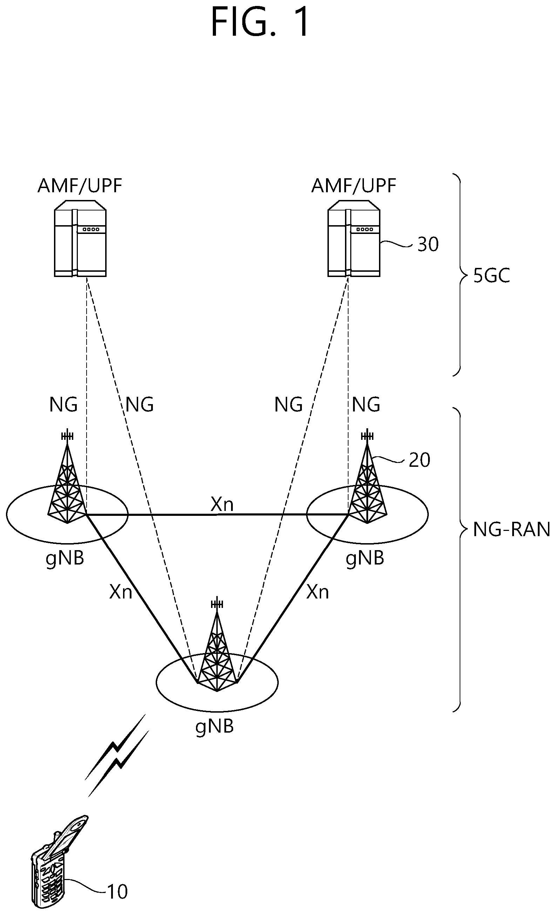

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

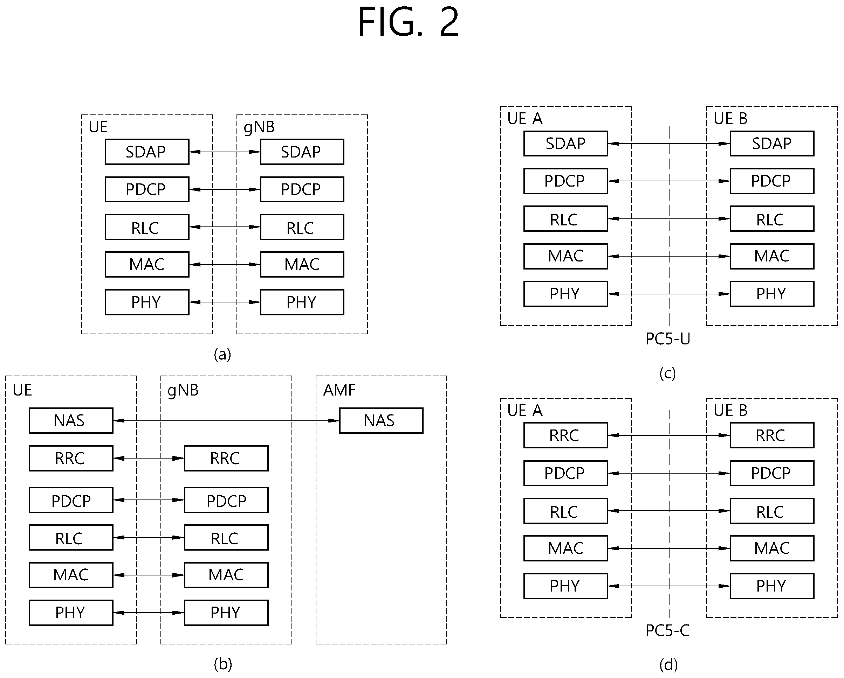

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

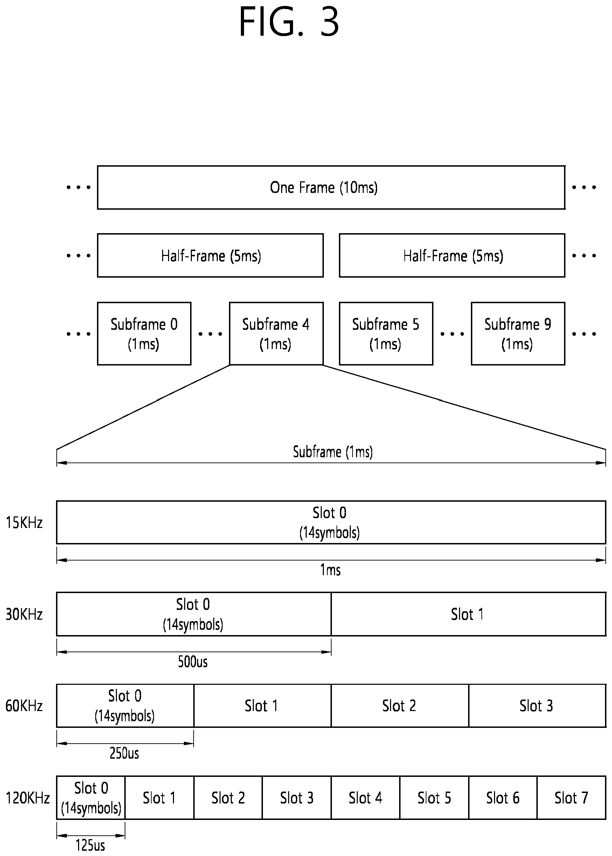

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{fame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{Frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

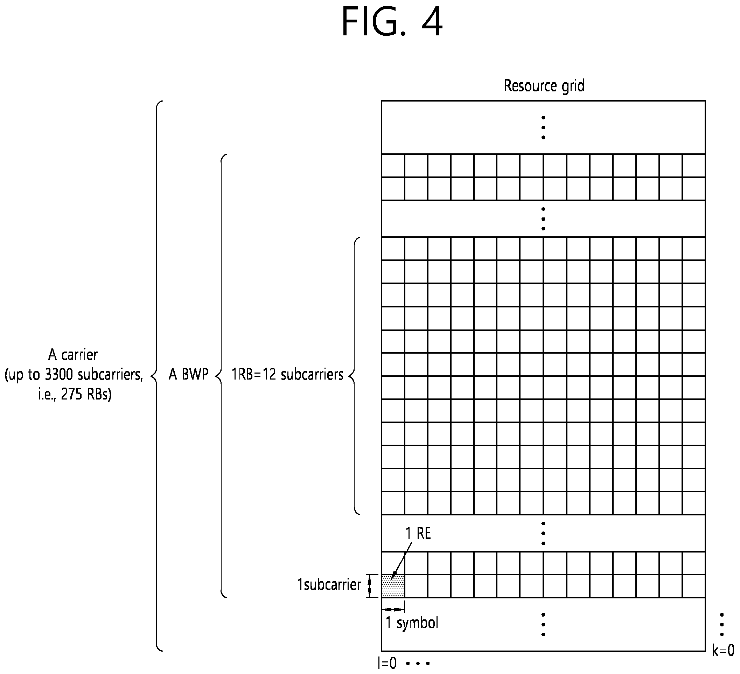

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

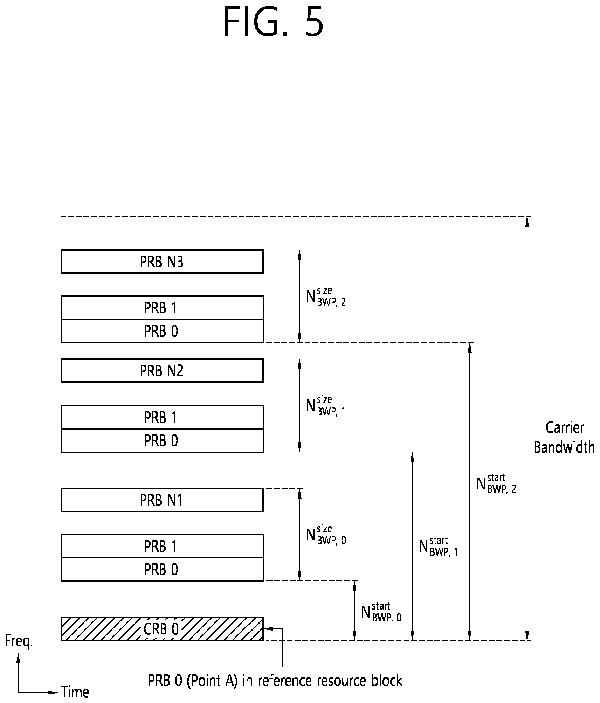

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

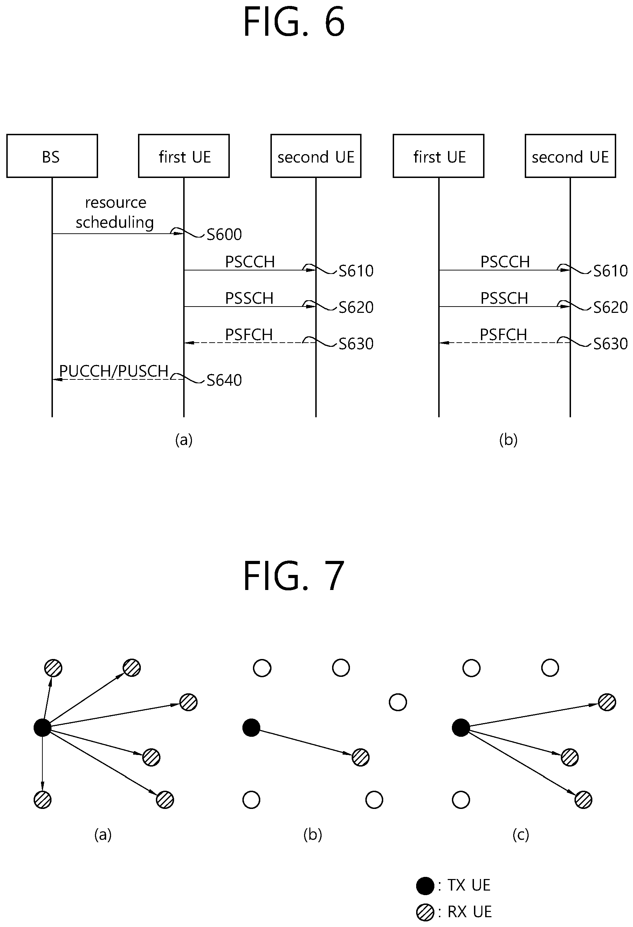

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, a first UE may transmit SCI to a second UE on PSCCH. Alternatively, for example, a first UE may transmit two consecutive SCI (e.g., 2-stage SCI) to a second UE on PSCCH and/or PSSCH. In this case, a second UE may decode two consecutive SCIs (e.g., 2-stage SCI) in order to receive the PSSCH from a first UE. In this specification, SCI transmitted on PSCCH may be referred to as a 1st SCI, SCI 1, 1st-stage SCI or 1st-stage SCI format, and SCI transmitted on the PSSCH may be referred to as a 2nd SCI, SCI 2, 2nd-stage SCI or 2nd-stage SCI format. For example, the 1st-stage SCI format may include SCI format 1-A, and the 2nd-stage SCI format may include SCI format 2-A and/or SCI format 2-B.

Referring to (a) or (b) of FIG. 6, in step S630, a first UE may receive the PSFCH. For example, a first UE and a second UE may determine PSFCH resources, and a second UE may transmit HARQ feedback to a first UE using the PSFCH resource.

Referring to (a) of FIG. 6, in step S640, the first UE may transmit SL HARQ feedback to the base station through the PUCCH and/or the PUSCH.

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

In this specification, the "configure or define" wording may be interpreted as being (pre)configured (via pre-defined signaling (e.g., SIB, MAC signaling, RRC signaling)) from a base station or a network. For example, "A may be configured" may include "that a base station or network (pre-)configures/defines or informs A for a UE". Alternatively, the wording "configure or define" may be interpreted as being configured or defined in advance by a system. For example, "A may be configured" may include "A is configured/defined in advance by a system".

Referring to the standard document, some procedures and technical specifications related to the present disclosure are shown below.

**[Table 5]**

| 3GPP TS 36.213 V16.2.0 | |
|---|---|
| 14.1.1.6 UE procedure for determining the subset of resources to be reported to higher layers in PSSCH resource selection in sidelink transmission mode 4 and in sensing measurement in sidelink transmission mode 3 In sidelink transmission mode 4, when requested by higher layers in subframe n for a carrier, the UE shall determine the set of resources to be reported to higher layers for PSSCH transmission according to the steps described in this Subclause. Parameters *L*_{subCH} the number of sub-channels to be used for the PSSCH transmission in a subframe, *P*_{rsvp_TX} the resource reservation interval, and *prio_{TX}* the priority to be transmitted in the associated SCI format 1 by the UE are all provided by higher layers (described in [8]). *Cᵣₑₛₑₗ* is determined according to Subclause 14.1.1.4B. | |
| In sidelink transmission mode 3, when requested by higher layers in subframe n for a carrier, the UE shall determine the set of resources to be reported to higher layers in sensing measurement according to the steps described in this Subclause. Parameters *L*_{subcH}, *P*_{rsvp_TX} and *prio_{TX}* are all provided by higher layers (described in [11]). *Cᵣₑₛₑₗ* is determined by *Cᵣₑₛₑₗ* =10*SL_RESOURCE_RESELECTION_COUNTER, where SL_RESOURCE_RESELECTION_COUNTER is provided by higher layers [11]. | |
| | |
| If partial sensing is configured by higher layers then the following steps are used: | |
| | 1) A candidate single-subframe resource for PSSCH transmission *R*_{x,y} is defined as a set of *L*_{subCH} contiguous sub-channels with sub-channel x+j in subframe ${t}_{y}^{SL}$ where *j =* 0,..., *L*_{subCH} -1. The UE shall determine by its implementation a set of subframes which consists of at least *Y* subframes within the time interval [*n + T*₁, *n + T*₂] where selections of *T*₁ and *T*₂ are up to UE implementations under *T*₁ ≤ 4 and *T*₂ₘᵢₙ(*prio_{TX}*) *≤ T*₂ ≤ 100, if *T*_{*2*min}(*prio_{TX}*) is provided by higher layers for *prio_{TX},* otherwise 20 ≤ *T*₂ ≤ 100. UE selection of *T*₂ shall fulfil the latency requirement and *Y* shall be greater than or equal to the high layer parameter *minNumCandidateSF.* The UE shall assume that any set of *L*_{subCH} contiguous sub-channels included in the corresponding PSSCH resource pool (described in 14.1.5) within the determined set of subframes correspond to one candidate single-subframe resource. The total number of the candidate single-subframe resources is denoted by *M*ₜₒₜₐₗ. |
| | 2) If a subframe ${t}_{y}^{SL}$ is included in the set of subframes in Step 1, the UE shall monitor any subframe ${t}_{y - k \times {P}_{step}}^{SL}$ if k-th bit of the high layer parameter *gapCandidateSensing* is set to 1. The UE shall perform the behaviour in the following steps based on PSCCH decoded and S-RSSI measured in these subframes. |
| | 3) The parameter *Th_{a,b}* is set to the value indicated by the i-th *SL-ThresPSSCH-RSRP* field in*SL-ThresPSSCH-RSRP-List* where *i =* (*a* - 1) * 8 + *b.* |
| | 4) The set *S_{A}* is initialized to the union of all the candidate single-subframe resources. The set *S_{B}* is initialized to an empty set. |

**[Table 6]**

| | | |
|---|---|---|
| | 5) The UE shall exclude any candidate single-subframe resource *R*_{x,y} from the set *S_{A}* if it meets all the following conditions: | |
| | | - the UE receives an SCI format 1 in subframe ${t}_{m}^{SL}$, and "Resource reservation" field and "Priority" field in the received SCI format 1 indicate the values *P*_{rsvp_RX} and *prio_{RX},* respectively according to Subclause 14.2.1. |
| | | - PSSCH-RSRP measurement according to the received SCI format 1 is higher than *Th_{prio_{TX},prio_{RX}}.* |
| | | - the SCI format received in subframe ${t}_{m}^{SL}$ or the same SCI format 1 which is assumed to be received in subframe(s) ${t}_{m + q \times {P}_{step} \times {P}_{rsvp _ RX}}^{SL}$ determines according to 14.1.1.4C the set of resource blocks and subframes which overlaps with ${R}_{x , y + j \times {P}_{rsvp _ TX}^{′}}$ for *q*=1, 2, ..., *Q* and *j*=0, 1, ..., *Cᵣₑₛₑₗ* -1. Here, $Q = \frac{1}{{P}_{rsvp _ RX}}$ if *P_{rsvp_RX}* < 1 and *y'-m* ≤ *Pₛₜₑₚ* × *P*_{*rsvp*_*RX*} + *Pₛₜₑₚ,* where ${t}_{y ′}^{SL}$ is the last subframe of the *Y* subframes , and *Q* = 1 otherwise. |
| | 6) If the number of candidate single-subframe resources remaining in the set *S_{A}* is smaller than 0.2 · *M*ₜₒₜₐₗ, then Step 4 is repeated with *Th_{a,b}* increased by 3 dB. | |
| | 7) For a candidate single-subframe resource *R*_{x,y} remaining in the set *S_{A},* the metric *E*_{x,y} is defined as the linear average of S-RSSI measured in sub-channels *x*+*k* for *k* = 0,..., *L*_{subCH} -1 in the monitored subframes in Step 2 that can be expressed by ${t}_{y - {P}_{step} * j}^{SL}$ for a non-negative integer*j*. | |
| | 8) The UE moves the candidate single-subframe resource *R*_{x,y} with the smallest metric *E*_{x,y} from the set *S_{A}* to *S_{B}.* This step is repeated until the number of candidate single-subframe resources in the set *S_{B}* becomes greater than or equal to 0.2·*M*ₜₒₜₐₗ. | |
| | 9) When the UE is configured by upper layers to transmit using resource pools on multiple carriers, it shall exclude a candidate single-subframe resource *R*_{x,y} from *S_{B}* if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10]. | |

**[Table 7]**

| | |
|---|---|
| The UE shall report set *S_{B}* to higher layers. | |
| If transmission based on random selection is configured by upper layers and when the UE is configured by upper layers to transmit using resource pools on multiple carriers, the following steps are used: | |
| | 1) A candidate single-subframe resource for PSSCH transmission *R*_{x,y} is defined as a set of *L*_{subCH} contiguous sub-channels with sub-channel *x+j* in subframe ${t}_{y}^{SL}$ where *j* = 0,..., *L*_{subCH} -1. The UE shall assume that any set of *L*_{subCH} contiguous sub-channels included in the corresponding PSSCH resource pool (described in 14.1.5) within the time interval [*n* + *T*₁, *n + T*₂] corresponds to one candidate single-subframe resource, where selections of *T*₁ and *T*₂ are up to UE |
| | implementations under *T*₁ ≤ 4 and *T*₂ₘᵢₙ(*prio_{TX}*) *≤ T*₂ ≤ 100, if *T*₂ₘᵢₙ(*prio_{TX}*) is provided by higher layers for *prio_{TX},* otherwise 20 ≤ *T*₂ ≤ 100. UE selection of *T*₂ shall fulfil the latency requirement. The total number of the candidate single-subframe resources is denoted by *M*ₜₒₜₐₗ. |
| | 2) The set *S_{A}* is initialized to the union of all the candidate single-subframe resources. The set *S_{B}* is initialized to an empty set. |
| | 3) The UE moves the candidate single-subframe resource *R*_{x,y} from the set *S_{A}* to *S_{B}*. |
| | 4) The UE shall exclude a candidate single-subframe resource *R*_{x,y} from *S_{B}* if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10]. |
| The UE shall report set *S_{B}* to higher layers. | |

On the other hand, since there was no existing technology to operate partial sensing combined with sidelink (SL) discontinuous reception (DRX), a method for selecting candidate resources when a UE performing partial sensing performs periodic transmission during an SL DRX operation needs to be defined.

According to one embodiment of the present disclosure, a method for selecting a candidate resource when a UE performing partial sensing in SL DRX operation performs periodic transmissions, and a device for supporting the method are proposed.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives a PSCCH (and/or PSSCH) (re)transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) PSSCH (and/or (NR or LTE) PSCCH) (and/or (NR or LTE) SL SSB (and/or UL channel/signal))". And, the methods proposed in the present disclosure may be used in combination with each other (in a new type of manner).

For example, the term "specific threshold" below may refer to a threshold value defined in advance or (pre-)configured by a higher layer (including an application layer) of a network, a base station, or a UE. Hereinafter, the term "specific configuration value" may refer to a value defined in advance or (pre-)configured by a higher layer (including an application layer) of a network, a base station, or a UE. Hereinafter, "configured by a network/base station" may mean an operation in which a base station configures (in advance) a UE by higher layer RRC signaling, configures/signals a UE through MAC CE, or signals a UE through DCI.

Hereinafter, PPS (or PBPS) means periodic-based partial sensing, and may mean an operation of performing sensing for a resource of a time point that precedes a resource by an integer multiple (k) of each period based on periods of a specific configuration value number when sensing for resource selection is performed. For example, the periods may be a period of the transmission resource configured in a transmission pool, a resource of a time point that precedes the time point of the candidate resource which is a target for determining resource collision in time by an integer multiple (k value) of each period, may be sensed, the k value may be configured in a form of a bitmap.

Hereinafter, CPS may mean continuous partial sensing, and may mean an operation of sensing all or a part of a time domain given as a specific configuration value. For example, CPS may include a short-term sensing (STS) operation in which sensing is performed for a relatively short period. Hereinafter, "partial sensing" may include the PPS operation or the CPS operation.

Hereinafter, partial sensing may mean a partial sensing including the PPS operation and/or the CPS operation.

For example, hereafter REV may refer to resource re-evaluation, and PEC may refer to resource pre-emption checking.

For example, a "candidate resource/slot" may refer to a resource that is selected to detect a resource conflict within a resource selection window when transmission resource selection is first triggered to transmit an arbitrary packet, and a resource selection window is selected to perform partial sensing. For example, "available resource/slot" may refer to a resource that is reported from the PHY layer to the MAC layer based on the above partial sensing as being available for transmission because no resource collisions are detected among the candidate resources. For example, " transmission resource/slot" refers to a resource that is finally selected by the MAC layer for use in SL transmission among the above reported resources.

When a power saving UE performs an SL DRX operation and simultaneously performs partial sensing based resource allocation, the transmitting UE may select all or more than or equal to a specific threshold number of candidate/available/transmission resources/slots for selecting periodic transmission resources of the transmitting UE in an SL DRX on-duration of a receiving UE or active duration interval at the time point of selecting the candidate/available/transmission resources/slots, in the following cases.

According to one embodiment of the present disclosure, if the channel congestion (interference or congestion) or congestion level (interference level or congestion level) (e.g., channel busy ratio (CBR)/channel occupancy ratio (CR)) is less than or equal to a specific threshold value, the transmitting UE may select the above-described candidate/available/transmission resources/slots from the on-duration/active time interval since the channel congestion within the on-duration is low. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, when the channel congestion or congestion level (e.g., CBR/CR) is greater than or equal to a specific threshold value, as the probability of transmission success may decrease due to transmission resource collisions caused by channel congestion within the on-duration/active time interval, a transmitting UE may select the above-described candidate/available/transmission resources/slots for more transmissions to increase the probability of transmission success within the on-duration/active time interval. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, based on the channel congestion or congestion level (e.g., CBR/CR) value, a transmitting UE may determine the number of candidate/available/transmission resources/slots to be selected from the on-duration/active time interval. For example, a transmitting UE may select the number, which is inversely proportional to the CBR/CR value, of candidate/available/transmission resources/slots, considering a situation with low channel congestion as described above. For example, a transmitting UE may select the number, proportional to the CBR/CR value, of candidate/available/transmission resources/slots to increase the transmission probability as described above. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

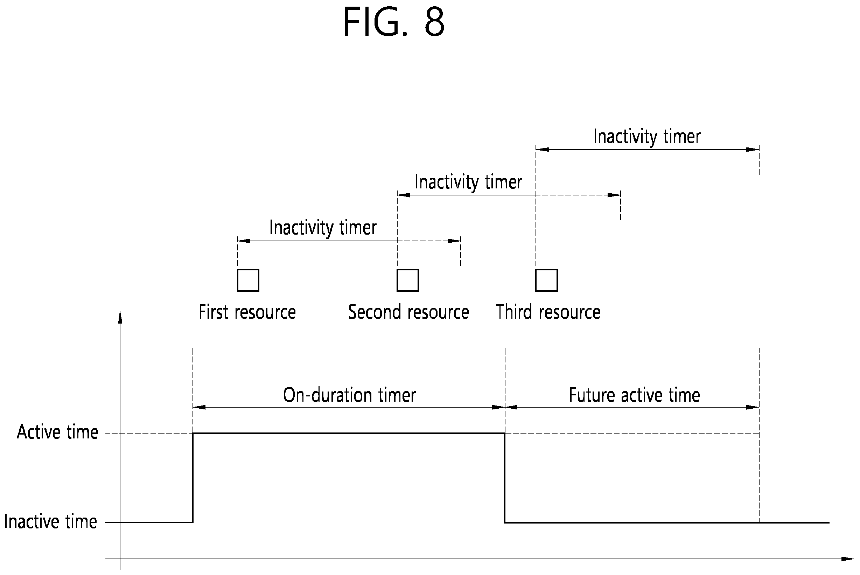

FIG. 8 shows a transmission resource being selected from an active time based on a CBR, according to one embodiment of the present disclosure. The embodiment of FIG. 8 may be combined with various embodiments of the present disclosure.

Referring to FIG. 8, an active time and inactive time related to an SL DRX configuration of a receiving UE is shown. A transmitting UE may obtain a CBR value for a resource pool. And, based on the CBR value, the number of transmission resources to be included within the active time of the SL DRX configuration may be determined. For example, in this embodiment, it is assumed that the number of transmission resources to be included within the active time is determined to be 2.

When performing resource selection for SL transmission, a transmitting UE may select transmission resources selected by the resource selection to be included within an active time of an SL DRX configuration used by a receiving UE. For example, the active time may refer to an interval during which an on-duration timer, an inactivity timer, or a retransmission timer is running. Referring to FIG. 8, a transmitting UE may select three resources, from the first resource to the third resource, to be within an active time. For example, as assumed above, since the number of transmission resources to be included within the active time is determined to be 2, the transmitting UE may select two resources, the first resource and the second resource, from the interval during which the on-duration timer of the SL DRX configuration is running, and may select the third resource from the remaining interval of the active time (i.e., the future active time). For example, if the second resource is reserved, and the transmitting UE performs an SL transmission based on the second resource, the receiving UE may start an inactivity timer such that the third resource is included within the active time.

For example, an interval during which a timer is running at the time point when a transmitting UE performs a resource selection may be referred to as a current active time, and an extended interval based on a transmission performed based on the resource selected through the resource selection may be referred to as a future active time.

According to one embodiment of the present disclosure, if the PDB is less than or equal to a specific threshold value and REV and/or PEC is enabled in the resource pool, a transmitting UE may select a candidate/available/transmission resource/slot described above from the on-duration/active time interval in order to secure resources for the REV/PEC based resource reselection. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, if the priority value of a packet to be transmitted is less than or equal to a specific threshold, a transmitting UE may select the candidate/available/transmission resources/slots described above from the on-duration/active time interval to increase the probability of successful reception by a receiving UE for the packet. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, if the minimum transmission distance for a packet to be transmitted is less than or equal to a specific threshold, since it is a situation where the channel congestion in the on-duration is low, the transmitting UE may select the candidate/available/transmission resources/slots described above from the on-duration/active time interval. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, if the minimum transmission distance for a packet to be transmitted is greater than or equal to a specific threshold value, since the probability of transmission success may decrease due to transmission resource collisions caused by channel congestion within the on-duration/active time interval, a transmitting UE may select the above-described candidate/available/transmission resource/slot for more transmissions to increase the probability of transmission success from the on-duration/active time interval. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, if the total number of (remaining) retransmissions for a packet to be transmitted is less than or equal to a specific threshold value, to increase the probability of transmission success within the remaining number of retransmissions, the transmitting UE may select the candidate/available/transmission resources/slots described above from the on-duration/active time interval. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, the number of candidate/available/transmission resources/slots to be selected is less than or equal to a specific threshold value, the transmitting UE may select the candidate/available/transmission resources/slots described above from the on-duration/active time interval. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, a transmitting UE may determine the number of candidate/available/transmission resources/slots to be selected in the on-duration/active time interval from the total number of candidate/available/transmission resources/slots to be selected based on ratio of the length of the on-duration/active time interval to the length of a resource selection window of the transmitting UE (e.g., to be proportional).

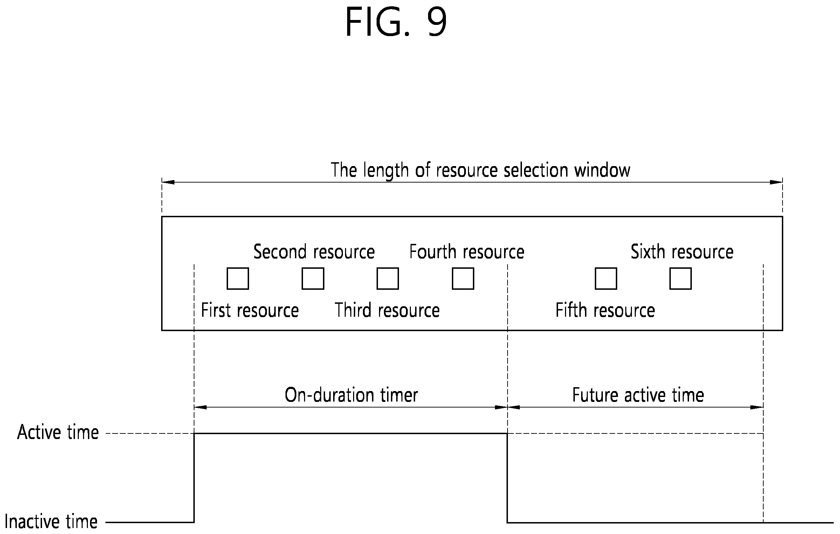

FIG. 9 shows a transmission resource selected based on the ratio of the length of the resource selection window to the on-duration timer running interval, according to one embodiment of the present disclosure. The embodiment of FIG. 9 may be combined with various embodiments of the present disclosure.

Referring now to FIG. 9, a resource selection window including the first to sixth resources, and an active time related to an SL DRX configuration of a receiving UE are shown. According to embodiments of the present disclosure, a transmitting UE may determine the number of resources to be selected to be included within the on-duration timer running interval from among the resources to be selected, based on the ratio of the on-duration timer running interval to the length of the resource selection window. For example, in FIG. 9, it is assumed that the length of the resource selection window is about 1.5 times the length of the on-duration timer running interval. Here, the transmitting UE may select four transmission resources from among the total six resources to be selected from the on-duration timer running interval, such as the ratio of the length of the resource selection window to the length of the on-duration timer running interval. That is, the transmitting UE may select the first to fourth resources to be included from the on-duration timer running interval. Further, the transmitting UE may select the remaining fifth resource and the sixth resource from the remaining active time. For example, the remaining active time may include a future active time.

According to one embodiment of the present disclosure, a UE performing partial sensing may detect resource conflicts within the on-duration/active time interval, so that the UE performing partial sensing may select the candidate/available/transmission resource/slot from the on-duration/active time interval. On the other hand, for example, a UE performing random selection may not be able to detect resource conflicts in the on-duration/active time interval, so that a UE performing the random selection may not select all transmission resources in the on-duration/active time interval, but may select at least initial transmission resources or at least a specific threshold number of retransmission resources, including an initial transmission, from the on-duration/active time interval.

According to one embodiment of the present disclosure, if re-evaluation (REV) is configured in a resource pool, the transmitting UE may select all transmission resources/slots or more than or equal to a specific threshold number of transmission resources/slots from the on-duration/active time interval, and if a resource conflict is detected, select retransmission resources/slots for the transmission resources/slots from a time domain that may be subsequently extended to an active time interval based on REV. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, if pre-emption checking (PEC) is configured in a resource pool, the transmitting UE may select all transmission resources/slots or more than or equal to a specific threshold number of transmission resources/slots from the on-duration/active time interval, and if a resource conflict is detected, select retransmission resources/slots for the transmission resources/slots from a time domain that may be subsequently extended to an active time interval based on PEC. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point. Alternatively, for example, the transmission resource selection operation described above may be performed only if the priority value of a packet to be transmitted is less than or equal to a specific threshold value (e.g., the pre-emption priority configured in the resource pool).

According to one embodiment of the present disclosure, in the case of a transmitting UE performing a unicast, if the on-duration/active time intervals of the plurality of receiving UEs performing communication with the transmitting UE partially overlap each other, in order to avoid channel congestion, the transmitting UE may select the candidate/available/transmission resources/slots described above from the interval where the on-duration/active time intervals of the plurality of receiving UEs do not partially overlap each other.

According to one embodiment of the present disclosure, for a transmitting UE performing a groupcast or broadcast, when a common SL DRX cycle configuration for the groupcast or broadcast is configured, in order to avoid resource congestion in the common on-duration/active time interval, the transmitting UE may not select all the candidate/available/transmission resources/slots from the common on-duration/active time interval, but may select a candidate/available/transmission resource/slot for at least initial transmission or more than a specific threshold number of candidate/available/transmission resources/slots from the common on-duration/active time interval, including an initial transmission.

According to one embodiment of the present disclosure, for a transmitting UE performing a groupcast, candidate/available/transmission resources/slots for an initial transmission (or more than a specific threshold number of retransmissions including an initial transmission) may be selected from the common on-duration/active time interval described above, and candidate/available/transmission resources/slots for NACK-based retransmissions of the transmission may be selected from an interval that is expected, at the corresponding time point, to be subsequently extended into an active time interval, excluding the common on-duration/active time interval described above.

According to one embodiment of the present disclosure, if the size of a packet to be transmitted is less than or equal to a specific threshold, a transmitting UE may select the candidate/available/transmission resources/slots described above from the on-duration/active time interval, since the number of transmission resources is small and thus the impact on channel congestion is small. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, when HARQ feedback is enabled in a resource pool, and when transmitting a packet with HARQ feedback enabled, a transmitting UE may select the largest integer number, which is smaller than (on-duration/total length of the active time interval)/(HARQ RTT), of candidate/available/transmitting resources/slots from the on-duration/active time interval, since the time interval between transmitting resources must be greater than or equal to a HARQ RTT value configured in the resource pool. For example, a transmitting UE may select the candidate/available/transmission resources/slots described above if the number of (consecutive) HARQ NACKs for a previously performed transmission is less than or equal to a specific threshold value, or if the ratio of the number of HARQ NACKs/HARQ ACKs is less than or equal to a specific threshold. For example, if the above case is not satisfied, a transmitting UE may select a candidate/available/transmitting resource for an initial transmission or candidate/available/transmitting resources for more than or equal to a specific threshold number of retransmissions, including an initial transmission, from the on-duration/active time interval, and select the remaining candidate/available/transmitting resources from the off-duration/inactive time interval at the time point (resource selection time point), which will be extended to the active time interval at a later time point.

According to one embodiment of the present disclosure, when a receiving UE operates as an SL DRX, a transmitting UE may perform the following operations with respect to resource selection for SL transmission

According to an embodiment of the present disclosure, whether to select only a candidate/available/transmission resource for an initial transmission for a packet to be transmitted from an SL DRX on-duration or an available active time interval of a receiving UE (an active time interval at the time point of selecting a resource or an active time interval at the time point of selecting a resource and an active time interval that is to be extended in the future expected at the time point of selecting a resource), or select more than or equal to a specific threshold number of candidate/available/transmission resources from the available active time interval including an initial transmission and a retransmissions may be determined based on QoS requirements such as the latency/reliability/distance, etc. linked to a transmission packet, the service/packet priority, a cast type, the congestion level/interference level of a resource pool, the level of transmission power, whether it is HARQ enabled/disabled MAC PDU transmission, the ratio of HARQ ACKs/NACKs, the number of (consecutive) HARQ NACK reception, whether it is an SL DRX operation, whether it is an inter-UE coordinating/coordinated UE, whether it is a relaying/remote UE, the sync selection priority for a sync signal of a UE, the MCS size/ the number of layers, CSI, the remaining level of UE battery power, the remaining PDB of a transmission packet, the maximum retransmission number for a packet, the remaining retransmission number, whether the peer UE is a P-UD, whether it is an initial transmission or a retransmission for a packet to be transmitted, min, communication distance, whether REV/PEC is performed.

According to one embodiment of the present disclosure, when a receiving UE operates as an SL DRX, a transmitting UE may select only an initial transmission resource for a packet to be transmitted from the receiving UE's SL DRX on-duration or available active time interval (an active time interval at the time point of selecting a resource and/or an active time interval at the time point of selecting the resource and an active time interval that is to be extended in the future expected at the time of selecting the resource) in the following cases.
1. If the priority value of a packet to be transmitted is greater than or equal to a specific threshold value
2. If the SL DRX cycle length of a receiving UE is less than or equal to a specific threshold value
3. If the SL DRX cycle length of a receiving UE is less than or equal to the PDB of a packet to be transmitted
4. If the congestion/CBR level of a transmission channel is higher than or equal to a specific threshold value.
5. If the minimum required transmission distance for a NACK-only groupcast is longer than or equal to a specific threshold value
6. If a HARQ feedback is enabled

According to one embodiment of the present disclosure, when a receiving UE operates as an SL DRX, a transmitting UE may select more than or equal to a specific threshold number of candidate/available/transmission resources, including an initial transmission and retransmission for a packet to be transmitted, from the SL DRX on-duration or available active time interval of the receiving UE in the following cases.
1. If the priority value of a packet to be transmitted is less than or equal to a specific threshold value
2. If the PDB value of a packet to be transmitted is less than or equal to a specific threshold value.
3. If the SL DRX cycle length of a receiving UE is greater than the PDB of a packet to be transmitted
4. If the congestion/CBR level of a transmission channel is less than or equal to a specific threshold value.
5. If the minimum required transmission distance for a NACK-only groupcast is shorter than or equal to a specific threshold value
6. If a HARQ feedback is disabled

According to various embodiments of the present disclosure, when a UE performing an SL DRX operation selects a transmission resource based on partial sensing, the resource selection linked to an SL DRX operation has the effect of minimizing power consumption due to unnecessary retransmissions by efficiently using resources and minimizing resource conflicts.

On the other hand, since there was no existing technology to operate partial sensing in combination with SL DRX, it is necessary to define a method for selecting a transmission resource when a UE performing partial sensing performs periodic transmission during an SL DRX operation.

According to one embodiment of the present disclosure, a method and a device supporting the method are proposed for adaptively selecting a transmission resource based on a receiving UE's SL DRX configuration when a UE performing partial sensing in SL DRX operation performs a periodic transmission.

According to one embodiment of the present disclosure, when a power saving UE performs SL DRX operation and simultaneously performs partial sensing based resource allocation, the transmitting UE performing the operation may select a transmission resource considering the SL DRX configuration of a receiving UE as follows.

According to an embodiment of the present disclosure, within an on-duration or active duration of a receiving UE, a transmitting UE may perform an initial transmission and some retransmissions for a packet to be transmitted, and expect the receiving UE to extend the active interval of the receiving UE based on the initial transmission and some retransmissions. And, a transmitting UE may perform the remaining retransmissions except for the initial transmission and the some retransmissions in the expected extended active interval.

According to one embodiment of the present disclosure, a receiving UE may receive a PSCCH/PSSCH from a transmitting UE and extend an active time interval of the receiving UE by a retransmission timer running time interval, based on the time interval until the retransmission resource that is being signaled through SCI in the PSCCH/PSSCH, or by operating the retransmission timer so that it includes the time point of the retransmission resource (and a margin considering resource re-selection). On the other hand, for example, a receiving UE may extend an active time interval of the receiving UE by the inactivity timer by operating an inactivity timer such that the receiving UE is able to receive a new transmission packet based on a SL process different from the PSCCH/PSSCH. For example, the final extended active time interval of the receiving UE may correspond to the union of the interval extended by the retransmission timer and the interval extended by the inactivity timer.

For example, if an active time interval is extended to receive an additional retransmission by operating a retransmission timer based on the reception of the PSCCH/PSSCH, when a discontinuous transmission (DTX) of the PSCCH/PSSCH occurs (i.e., it is not received), a receiving UE may not be able to receive the additional retransmission. To address this problem, a receiving UE may signal the time gap until the last retransmission of the packet it transmits through the SL process via SCI and set the inactivity timer value to be greater than or equal to the time gap (and a margin considering resource reselection) until the last retransmission.

According to one embodiment of the present disclosure, a transmitting UE may select a transmission resource based on the retransmission timer value of a receiving UE. For example, if a retransmission timer value is set in a resource pool, a transmitting UE may select a transmission resource, or reselect a resource based on REV/PEC from a time interval less than or equal to the retransmission timer value. For example, when a receiving UE selects the retransmission timer value, the receiving UE may select the retransmission timer value with a value greater than or equal to the maximum time interval (or the maximum time interval plus a margin considering resource reselection) between transmission resources that a transmitting UE can signal through one SCI.

According to one embodiment of the present disclosure, a transmitting UE may select more than or equal to a specific threshold number of transmission resources from the retransmission timer value of a receiving UE. By doing so, even if a receiving UE does not receive a specific PSCCH/PSSCH, the receiving UE may still be able to receive any one of the more than equal to the specific threshold number of transmissions within the active time interval extended based on the retransmission timer operated based on the previously received PSCCH/PSSCH.

According to one embodiment of the present disclosure, if a receiving UE is expecting a retransmission due to a failure to decode a previously received PSCCH/PSSCH, and does not receive the scheduled PSCCH/PSSCH transmission at the time point at which the (re)transmission is scheduled via a previously received SCI, the receiving UE may assume that DTX (a case where a PSCCH is not received) has occurred and increase the value of the retransmission timer set based on the previously received SCI by a specific setting value, and/or restart the retransmission timer.

According to one embodiment of the present disclosure, if a receiving UE fails to receive a PSCCH/PSSCH, the receiving UE may not be able to receive further retransmissions from a transmitting UE, as the receiving UE may not be able to extend its active time interval via its retransmission timer based on the reception of the PSCCH/PSSCH. In this case, for example, a transmitting UE may drop the packet without further transmission if it determines that a receiving UE has failed to receive the PSCCH/PSSCH (DTX) as described above.

According to one embodiment of the present disclosure, if resource reservation information for the next retransmission resource is not present in the SCI received by a receiving UE, the receiving UE may determine that the next retransmission resource is further away than the maximum inter-transmission resource time interval that can be signaled by SCI, and may increase the retransmission timer value by a specific setting value from the time point of receiving the SCI, or restart the retransmission timer.

According to one embodiment of the present disclosure, a transmitting UE may select a candidate/available/transmission resource for a packet to be transmitted only for a section of a receiving UE's SL DRX on-duration or available active time interval from a resource selection window.

According to one embodiment of the present disclosure, if there are only candidate resources that are less than a required Ymin resources determined as a specific threshold value, within the on-duration or available active time interval within the resource selection window, a transmitting UE may perform the following operations.
1. Randomly select a transmission resource in a configured exceptional pool (if random resource selection is not allowed in an SL resource pool.
2. Transmit by randomly selecting a resource in an SL resource pool, when random resource selection is allowed in the SL resource pool and the priority value of a packet to be transmitted is less than or equal to a specific threshold value.
3. Randomly select a transmission resource in a configured exceptional pool, when random resource selection is allowed in an SL resource pool and the priority value of a packet to be transmitted is greater than a specific threshold value.
4. Randomly select a transmission resource in another SL resource pool in which random selection is allowed or only random selection is allowed, when random selection is allowed in an SL resource pool and the priority value of a packet to be transmitted is greater than a specific threshold value.
5. Drop a transmission for a packet, when random resource selection is allowed in an SL resource pool and the priority value of the packet to be transmitted is greater than a specific threshold value.
6. Select a transmission resource by performing a partial sensing based resource selection procedure based on the number, which is less than the Ymin, of candidate resources (if random resource selection is not allowed in an SL resource pool).
7. Select a transmission resource by performing a resource selection procedure based on the number, which is less than the Ymin, of candidate resources, and select an additionally required transmission resource based on random resource selection in an SL resource pool, when random resource selection is allowed in the SL resource pool.
8. Select a transmission resource by performing a resource selection procedure based on the number, which is less than the Ymin, of candidate resources, and select an additionally required transmission resource based on random resource selection in an SL resource pool, when random resource selection is allowed in the SL resource pool, and the priority value of a packet to be transmitted is less than or equal to a specific threshold value.
9. Select a transmission resource by performing a resource selection procedure based on the number, which is less than the Ymin, of candidate resources, and and select an additionally required transmission resource based on random resource selection in other SL resource pool in which random selection is allowed or the other SL resource pool in which only random selection is allowed, wherein a transmission of a packet with a priority value is allowed, when random resource selection is allowed in the SL resource pool, and the priority value of the packet to be transmitted is greater than a specific threshold value.
10. Drop a transmission for the packet

According to one embodiment of the present disclosure, a specific threshold value to be compared with the priority value of a packet related to the random resource selection may be a pre-emption priority value configured in the resource pool.

According to one embodiment of the present disclosure, the specific threshold value to be compared to the priority value of the packet related to the random resource selection may be configured differently for cases where REV and/or PEC is enabled or disabled for the packet to be transmitted or for the resource pool. For example, the specific threshold value for the priority value that is applied when REV and/or PEC is disabled for the packet to be transmitted or for the resource pool may be less than the specific threshold value for the priority value that is applied when REV and/or PEC is enabled.

According to one embodiment of the present disclosure, a specific threshold value to be compared with the priority value of the packet related to the random resource selection may be configured based on the congestion/CBR value of the resource pool. For example, a specific threshold value for the priority value that is applied when the congestion/CBR value of the resource pool for the packet to be transmitted is high may be less than a specific threshold value for the priority value that is applied when the congestion/CBR value of the resource pool is low.

According to one embodiment of the present disclosure, the specific threshold value to be compared to the priority value of the packet related to the random resource selection may be configured differently depending on whether HARQ feedback is enabled or disabled for the packet to be transmitted. For example, the specific threshold value for the priority value applied when HARQ feedback is disabled for the packet to be transmitted may be less than the specific threshold value for the priority value applied when HARQ feedback is enabled.

According to one embodiment of the present disclosure, a specific threshold value to be compared with the priority value of the packet related to the random resource selection may be configured based on a minimum communication distance for SL communication or HARQ feedback configured in the resource pool. For example, a specific threshold value for the priority value that is applied when the minimum communication distance is large for the packet to be transmitted may be less than a specific threshold value for the priority value that is applied when the minimum communication distance is small.

According to one embodiment of the present disclosure, the specific threshold value to be compared with the priority value of the packet related to the random resource selection may be configured differently for the case of initial transmission and retransmission for the packet to be transmitted. For example, the specific threshold value for the priority value applied in the case of the initial transmission of the packet to be transmitted may be smaller than the specific threshold value for the retransmission.

According to one embodiment of the present disclosure, the specific threshold value to be compared to the priority value of a packet related to the random resource selection may be configured differently when a UE operates as SL DRX and when a UE does not operate as SL DRX. For example, the specific threshold value for the priority value applied when a UE operates as SL DRX may be less than a specific threshold value for the priority value applied when a UE does not operate as SL DRX.

According to one embodiment of the present disclosure, the specific threshold value to be compared with the priority value of a packet related to the random resource selection may be configured differently when a UE selects a resource for periodic transmission and when a UE selects a resource for aperiodic transmission. For example, the specific threshold value for the priority value that is applied when a UE selects a resource for an aperiodic transmission may be less than the specific threshold value for the priority value that is applied when a UE selects a resource for a periodic transmission.

According to one embodiment of the present disclosure, a transmitting UE may determine all of the discontinuous SL DRX on-durations or all of the available active time intervals of a receiving UE within the PDB of a packet to be transmitted as a resource selection window interval within which to select a resource to transmit the packet.

According to one embodiment of the present disclosure, when a discontinuous resource selection window is selected as described above, a transmitting UE may configure a CPS window with the length less than or equal to a specific threshold value before each resource selection window and perform CPS for resource selection. For example, the specific threshold value for the length of the CPS window may be less than the specific threshold value for the length of the CPS window configured when a receiving UE does not operate as an SL DRX.

According to one embodiment of the present disclosure, if, within the resource selection window selected to perform a TB transmission within an SL resource pool, or within the packet delay budget (PDB) required for the TB transmission, the sum of the lengths of an SL DRX on-duration or available active time interval(s) of the receiving UE is less than the length of a minimum resource selection window (or, T2_min) determined as a specific threshold value, or less than the minimum number of transmissions or minimum number of resources required for successful transmission of the TB, a transmitting UE may perform the following operations.
1. Drop the transmission since the minimum condition to successfully transmit to TB is not satisfied.
2. Select an SL resource pool where the sum of the overlapping lengths between an SL DRX on-duration or available active time interval(s) of a receiving UE within the resource selection window is greater than or equal to the minimum resource selection window length (or T2_min), select a transmission resource in the SL resource pool and transmit the TB.
3. Determine whether to drop the TB transmission or to select another SL resource pool and transmit, based on the priority linked to the TB.
4. Drop the TB transmission when the priority value linked to the transmitted TB is greater than a specific threshold value, or transmit the TB by selecting a resource in an SL resource pool where the sum of the overlapping lengths between an SL DRX on-duration or available active time interval(s) of a receiving UE within the resource selection window is greater than or equal to the minimum resource selection window length (or T2_min) when the priority value is less than or equal to the specific threshold value.

According to various embodiments of the present disclosure, when a UE performing SL DRX operation selects a transmission resource based on partial sensing, there may be a beneficial effect of minimizing power consumption due to unnecessary retransmissions by adaptively selecting a resource based on an SL DRX configuration of a receiving UE thereby minimizing resource conflicts.

On the other hand, since there was no existing technology that combines partial sensing with SL DRX, there is a problem that a transmitting UE cannot select a transmission resource for a transmission to be performed within an on-duration or active time interval of a receiving UE.

According to one embodiment of the present disclosure, a method for selecting a transmission resource for a UE performing partial sensing in SL DRX operation such that a transmission is performed within an on-duration or active time interval of a receiving UE, and a device to support the method are proposed.

According to one embodiment of the present disclosure, if the PHY layer of a transmitting UE selects candidate resources for selecting a resource for a periodic transmission, selects available resources based on an RSRP threshold and reports them to the MAC layer, the MAC layer may select the number, which is greater than or equal to a specific threshold configured respectively for an SL DRX on-duration or active time interval and an off-duration or inactive time interval (which is expected to be extended to an active time interval) of a receiving UE, of transmission resources. Here, if the number of reported available resources that belong to the on-duration or active time interval is less than the specific threshold configured for the interval, the MAC layer may trigger resource reselection to the PHY layer.

According to one embodiment of the present disclosure, the MAC layer may signal to the PHY layer through a specific flag or higher layer signaling that it has triggered resource reselection for the reasons described above. For example, the MAC layer may configure to the PHY layer by re-adjusting the starting time point (or the minimum value of the starting time point or the maximum value of the starting time point) and the ending time point (or the minimum value of the ending time point or the maximum value of the ending time point) of a resource selection window for resource reselection to be different from the existing values. For example, the MAC layer may configure to the PHY layer by re-adjusting the length of the resource selection window for resource reselection differently from the existing value. For example, the MAC layer may configure to the PHY layer such that a specific time interval configured by a specific setting value is included within the resource selection window for resource reselection.

According to one embodiment of the present disclosure, the MAC layer may configure by re-adjusting the target resource ratio and/or the maximum value of an RSRP threshold value and/or the step of an RSRP increment, and the target resource ratio and/or the maximum value of the RSRP threshold value and/or the step of an RSRP increment for the on-duration or active time interval, to the PHY layer differently from the existing values.

According to one embodiment of the present disclosure, the MAC layer may configure to the PHY layer a position or pattern of candidate resources within an on-duration or active time interval differently from the position or pattern of all or part of the existing candidate resources, or may indicate through a specific flag or higher layer signaling such that the PHY layer selects new candidate resources based on a new position or pattern different from the position or pattern of the existing candidate resources.

According to one embodiment of the present disclosure, when selecting a transmission resource from the on-duration or active time interval, if a HARQ feedback is enabled in a resource pool and when transmitting a MAC PDU with HARQ feedback enabled, transmission resources may be selected such that the interval between transmission resources is greater than or equal to the sum of a minimum PSSCH-to-PSFCH time interval and a HARQ RTT value. Here, the number of candidate/available/transmission resources that may be selected to satisfy the above conditions from the on-duration or active time interval may be less than or equal to a specific threshold value, which is the number of transmission resources that have to be selected from the on-duration or active time interval.

For example, if the value of ((the length of the on-duration or active time interval)/(the sum of the minimum PSSCH-to-PSFCH time interval and the HARQ RTT value)) is less than or equal to a specific threshold value, which is the number of transmission resources that have to be selected from the on-duration or active time interval, a transmitting UE may select transmission resources such that a retransmission based on the HARQ feedback and a blind retransmission can be performed by being multiplexed within the on-duration or active time interval. For example, within the on-duration or active time interval, the number, which is greater than equal to a specific threshold value, of transmission resources are grouped, blind retransmissions are performed within the group of transmission resources, and the final HARQ feedback for the transmission using all transmission resources belonging to each of the groups may be transmitted from a receiving UE to a transmitting UE through a PSFCH resource allocated after the last transmission resource in each of the groups by the UE processing time.

According to one embodiment of the present disclosure, if a transmitting UE is operating in mode-1 related to an SL resource allocation (i.e., when a base station allocates an SL transmission resource to a UE), and the resource allocated to perform an initial transmission for a packet to be transmitted is not included within the on-duration or active time interval of a receiving UE, the UE may select a transmission resource for the initial transmission based on an SL mode-2 resource allocation scheme. For example, a transmitting UE may randomly select a resource for the initial transmission from the on-duration or active time interval of a receiving UE. For example, a transmitting UE may randomly select a resource for an initial transmission from among resources whose RSRP value is less than or equal to a specific threshold value from the on-duration or active time interval of a receiving UE based on partial sensing results for other periodic or aperiodic transmissions.

According to an embodiment of the present disclosure, in the cast described above, when a time interval between a resource selected for an initial transmission from an on-duration or an active time interval of the receiving UE based on SL mode-2 resource allocation scheme and a transmission resource configured by a base station based on SL mode-1 resource allocation scheme is greater than a specific threshold value (e.g., a retransmission timer value of a receiving UE, or the maximum time interval between resources that a transmitting UE can signal through SCI), the receiving UE may not receive a transmission using the resource configured by the base station even if the receiving UE extends the SL DRX active time interval of the receiving UE based on the receiving UE receiving the initial transmission.

For example, in the cast described above, a transmitting UE may select all of transmission resources for a packet to transmit from the on-duration or active time interval of the receiving UE. Or, for example, a transmitting UE may release all resources configured to the transmitting UE by a base station based on SL mode-1 resource allocation scheme, and select all transmission resources by performing partial sensing based on SL mode-2 resource allocation scheme. Or, for example, in the cast described above, a transmitting UE may transmit only using transmission resources selected from the on-duration or active time interval of the receiving UE, and drop all of transmissions using resources configured by a base station.

According to an embodiment of the present disclosure, when a transmitting UE operates on SL resource allocation related mode-1, in order for a receiving UE to receive a transmission through the next retransmission resource based on SCI reception, the transmitting UE may drop a transmission through a transmission resource that will not extend the SL DRX active time interval of a receiving UE. For example, when a receiving UE extends the SL DRX active time interval by operating a retransmission timer based on the time point of receiving a PSCCH/PSSCH, if an interval between contiguous resources among resources configured by a base station is greater than a retransmission timer value of the receiving UE, the transmitting UE may only use a preceding resource among the contiguous resources, and drop a transmission using the following resources.

According to an embodiment of the present disclosure, a transmitting UE may configure an SL DRX configuration of a receiving UE such that the time point of resource selection for periodic transmissions of its own is present within an on-duration of a receiving UE or within a range after the starting time point of the on-duration by a specific threshold value. For example, if a transmitting UE performs periodic transmissions corresponding to a plurality of SL processes to the same receiving UE, the transmitting UE may configure an SL DRX configuration of the receiving UE such that the triggering time point of periodic transmission resource selection of the temporally latest of the plurality of periodic transmissions is present within an on-duration of a receiving UE or within a range after the starting time point of the on-duration by a specific threshold value.

According to an embodiment of the present disclosure, an initial transmission and/or all retransmission resources for the temporally most preceding first periodic transmission or at least one periodic transmission among periodic transmissions corresponding to the plurality of SL processes may be selected to be included within the on-duration of a receiving UE. For example, in the case of the plurality of periodic transmissions, in order for other periodic transmission resources which is not included within the on-duration of a receiving UE to be included within an extended active time interval based on an inactivity timer by a periodic transmission transmitted within the on-duration of the receiving UE, resources for the other periodic transmissions may be selected. Or, for example, an inactivity timer value of a receiving UE may be set such that it may include the other periodic transmission resources of the receiving UE, or may be set as a value which is greater than or equal to a time interval between the other periodic transmissions.

According to an embodiment of the present disclosure, when a receiving UE receiving a TB transmitted by a transmitting UE performs an SL DRX operation, if resource (re)selection is triggered in the transmitting UE at the time point of the slot n, an active time interval of the receiving UE from which the transmitting UE can select a transmission resource may include following intervals.
1. An SL DRX on-duration.
2. An active time interval of a receiving UE at the time point of the slot n #1, extended based on a transmission resource for other TBs already transmitted by a transmitting UE to a receiving UE to receive the TB and an SCI reception.
3. An active time interval of a receiving UE that is expected at the time point of the slot n #2, extended based on a resource reserved by SCI already transmitted, linked to other TBs to be transmitted by a transmitting UE to a receiving UE to receive the TB.
4. An active time interval of a receiving UE that is expected at the time point of the slot n #3, extended based on resources selected for other TBs to be transmitted by a transmitting UE to a receiving UE to receive the TB and an expected reception for linked SCI to be transmitted.
5. An active time interval of a receiving UE at the time point of the slot n #4, extended based on a transmission resource already transmitted for the TB by a transmitting UE and an SCI reception.
6. An active time interval of a receiving UE that is expected at the time point of the slot n #5, extended based on a reserved resource by previously transmitted SCI linked to the TB transmission by a transmitting UE.
7. An active time interval of a receiving UE that is expected at the time point of the slot n #6, extended based on expected receptions resources selected for the TB transmission by a transmitting UE and for linked SCI to be transmitted.
8. An active time interval that includes an active time interval in which a receiving UE wakes up from sleep mode in order to perform feedback/response to channel state information (CSI) since a transmitting UE requests the CSI to the receiving UE, in addition to the on-duration and (extended) active time intervals described in 1. through 7. above.

According to one embodiment of the present disclosure, when a receiving UE performs SL DRX operation as described above, and a transmitting UE selects based on full sensing or partial sensing or random selection of resources and transmits, uncertainty may arise that the transmitting UE fails to transmit due to half duplex or the like, or that the receiving UE fails to receive due to DTX or TX/RX prioritization or the like. In such cases, a problem may arise in that the receiving UE may not be able to extend the active time interval based on the received PSCCH and receive subsequent retransmissions. For example, in order to eliminate the uncertainty, the transmitting UE may select an initial transmission resource (and the number, which is greater than or equal to a specific threshold value, of retransmission resources) from the following intervals.
a) An on-duration of the receiving UE
b) The extended active time interval #1
c) The extended active time interval #1 and the extended active time interval #2
d) The extended active time interval #1 and the extended active time interval #2 and the active time interval #3

According to one embodiment of the present disclosure, in the case described above, an initial transmission resource may be selected from a) ~ d) intervals, and a resource that is reselected from a previously selected resource based on REV and/or PEC may be selected from an active time interval related to a TB to be transmitted, as follows,
e) The a) interval
f) The extended active time interval #4
g) The extended active time interval #4 and the active time interval #5
h) The extended active time interval #4 and the active time interval #5 and the active time interval #6

Alternatively, it may be selected from an active time interval linked to another TB transmission in addition to the a) interval above, as described below.
i) The a) interval.
j) The summed interval of the b) interval and the f) interval
k) The summed interval of the c) interval and the g) interval
l) The summed interval of the e) interval and the h) interval

According to one embodiment of the present disclosure, when resources are initially selected based on resource selection triggering for TBs to be transmitted in the case described above, an initial transmission resource may be selected only in the a) interval, the number, which is greater than or equal to a specific threshold number, of retransmission resources may be selected in the b) interval, or the summed interval of the b) and c) intervals, and the remaining retransmission resources may be selected from the entire extended active time interval d), excluding the resource selection interval described above.

According to various embodiments of the present disclosure, when a UE performing SL DRX operation selects a transmission resource based on partial sensing, by a transmitting UE selecting a transmission resource so that the transmission is performed in the on-duration or active time interval of a receiving UE, it has the effect of increasing the transmission probability and minimizing power consumption due to unnecessary retransmissions.

According to the prior art, when a transmitting UE selects a transmission resource from an active time of an SL DRX configuration used by a receiving UE to perform an SL DRX operation, there is a problem that the number of resources within the active time is constant regardless of the channel state in the resource pool from which the resource is to be selected, making it difficult to control congestion within the active time.

According to an embodiment of the present disclosure, the number of transmission resources within an active time of an SL DRX configuration is determined based on the CBR in a resource pool, and since a resource is selected based on the determined number of transmission resources, congestion control may be performed more smoothly within an active time of an SL DRX configuration.

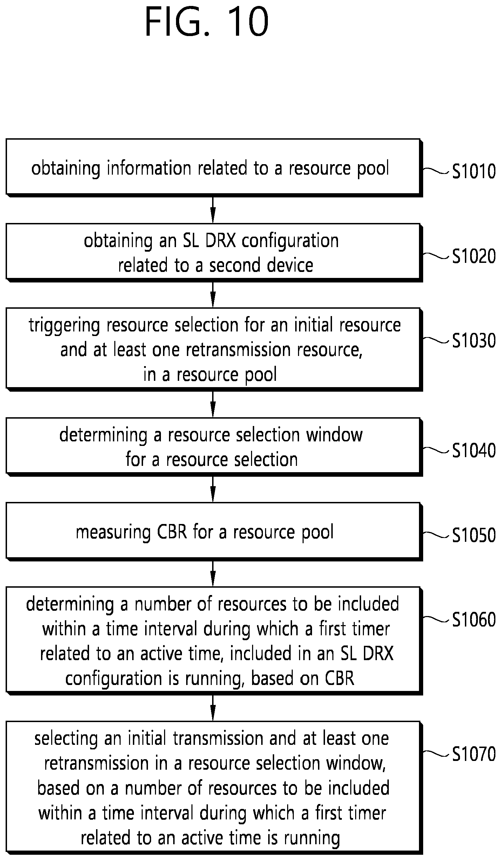

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device may obtain information related to a resource pool. In step S1020, the first device may obtain a sidelink, SL, discontinuous reception, DRX, configuration related to a second device. In step S 1030, the first device may trigger resource selection for an initial transmission resource and at least one retransmission resource, in the resource pool. In step S1040, the first device may determine a resource selection window for the resource selection. In step S1050, the first device may measure channel busy ratio, CBR, for the resource pool. In step S 1060, the first device may determine a number of resources to be included within a time interval during which a first timer related to an active time, included in the SL DRX configuration is running, based on the CBR. In step S1070, the first device may select the initial transmission resource and the at least one retransmission resource in the resource selection window, based on the number of the resources to be included within the time interval during which the first timer related to an active time is running.

For example, a resource which is not a resource to be included within the time interval during which the first timer related to an active time is running, among the initial transmission resource and the at least one retransmission resource may be selected from a future active time interval.

For example, the future active time interval may include a time interval during which the first timer related to an active time is to operate, based on an SL transmission performed based on the initial transmission resource or the at least one retransmission resource.

For example, the future active time interval may be a time interval during which the first timer related to an active time is to operate, based on an SL transmission performed based on the initial transmission resource or the at least one retransmission resource, excluding the time interval during which the first timer related to an active time is running.

For example, the resource selection may be related to a transmission of a medium access control, MAC, protocol data unit, PDU.

For example, determining the number of resources to be included within the time interval during which the first timer related to an active time is running may include: adjusting the number of resources to be included within the time interval during which the first timer related to an active time is running, based on packet delay budget, PDB, related to the MAC PDU being less than or equal to a threshold value.

For example, determining the number of resources to be included within the time interval during which the first timer related to an active time is running may include: adjusting the number of resources to be included within the time interval during which the first timer related to an active time is running, based on a priority related to the MAC PDU.

For example, determining the number of resources to be included within the time interval during which the first timer related to an active time is running may include: adjusting the number of resources to be included within the time interval during which the first timer related to an active time is running, based on a minimum transmission distance related to the MAC PDU.

For example, the first timer related to an active time may be an SL DRX on-duration timer.

For example, determining the number of resources to be included within the time interval during which the first timer related to an active time is running may include: adjusting the number of resources to be included within the time interval during which the first timer related to an active time is running, based on ratio of a length of the resource selection window to a length of an interval by which the SL DRX on-duration timer runs.

For example, at least one resource may be selected from the interval by which the SL DRX on-duration timer runs by the number of resources to be included within the time interval during which the SL DRX on-duration timer is running, and a resource which is not the at least one resource selected from the time interval during which the SL DRX on-duration timer is running, among the initial transmission resource and the at least one retransmission resource may be selected from a future active time interval.

For example, the future active time interval may include a time interval during which a second timer related to an active time is to operate, based on an SL transmission performed based on the initial transmission resource or the at least one retransmission resource.

For example, the future active time interval may be a time interval during which a second timer related to an active time is to operate, based on an SL transmission performed based on the initial transmission resource or the at least one retransmission resource, excluding the time interval during which the first timer related to an active time is running.

The embodiments described above may be applied to various devices described below. First, a processor 102 of a first device 100 may obtain information related to a resource pool. And, the processor 102 of the first device 100 may obtain a sidelink, SL, discontinuous reception, DRX, configuration related to a second device 200. And, the processor 102 of the first device 100 may trigger resource selection for an initial transmission resource and at least one retransmission resource, in the resource pool. And, the processor 102 of the first device 100 may determine a resource selection window for the resource selection. And, the processor 102 of the first device 100 may measure channel busy ratio, CBR, for the resource pool. And, the processor 102 of the first device 100 may determine a number of resources to be included within a time interval during which a first timer related to an active time, included in the SL DRX configuration is running, based on the CBR. And, the processor 102 of the first device 100 may select the initial transmission resource and the at least one retransmission resource in the resource selection window, based on the number of the resources to be included within the time interval during which the first timer related to an active time is running.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain information related to a resource pool; obtain a sidelink, SL, discontinuous reception, DRX, configuration related to a second device; trigger resource selection for an initial transmission resource and at least one retransmission resource, in the resource pool; determine a resource selection window for the resource selection; measuring channel busy ratio, CBR, for the resource pool; determine a number of resources to be included within a time interval during which a first timer related to an active time, included in the SL DRX configuration is running, based on the CBR; and select the initial transmission resource and the at least one retransmission resource in the resource selection window, based on the number of the resources to be included within the time interval during which the first timer related to an active time is running.

For example, a resource which is not a resource to be included within the time interval during which the first timer related to an active time is running, among the initial transmission resource and the at least one retransmission resource may be selected from a future active time interval.

For example, the future active time interval may include a time interval during which the first timer related to an active time is to operate, based on an SL transmission performed based on the initial transmission resource or the at least one retransmission resource.

For example, the future active time interval may be a time interval during which the first timer related to an active time is to operate, based on an SL transmission performed based on the initial transmission resource or the at least one retransmission resource, excluding the time interval during which the first timer related to an active time is running.

For example, the resource selection may be related to a transmission of a medium access control, MAC, protocol data unit, PDU.

For example, an operation of determining the number of resources to be included within the time interval during which the first timer related to an active time is running may include: adjusting the number of resources to be included within the time interval during which the first timer related to an active time is running, based on packet delay budget, PDB, related to the MAC PDU being less than or equal to a threshold value.

For example, an operation of determining the number of resources to be included within the time interval during which the first timer related to an active time is running may include: adjusting the number of resources to be included within the time interval during which the first timer related to an active time is running, based on a priority related to the MAC PDU.

For example, an operation of determining the number of resources to be included within the time interval during which the first timer related to an active time is running may include: adjusting the number of resources to be included within the time interval during which the first timer related to an active time is running, based on a minimum transmission distance related to the MAC PDU.

For example, the first timer related to an active time may be an SL DRX on-duration timer.

For example, an operation of determining the number of resources to be included within the time interval during which the first timer related to an active time is running may include: adjusting the number of resources to be included within the time interval during which the first timer related to an active time is running, based on ratio of a length of the resource selection window to a length of an interval by which the SL DRX on-duration timer runs.

For example, at least one resource may be selected from the interval by which the SL DRX on-duration timer runs by the number of resources to be included within the time interval during which the SL DRX on-duration timer is running, and a resource which is not the at least one resource selected from the time interval during which the SL DRX on-duration timer is running, among the initial transmission resource and the at least one retransmission resource may be selected from a future active time interval.

For example, the future active time interval may include a time interval during which a second timer related to an active time is to operate, based on an SL transmission performed based on the initial transmission resource or the at least one retransmission resource.

For example, the future active time interval may be a time interval during which a second timer related to an active time is to operate, based on an SL transmission performed based on the initial transmission resource or the at least one retransmission resource, excluding the time interval during which the first timer related to an active time is running.

According to an embodiment of the present disclosure, a device adapted to control a first user equipment, UE, may be proposed. For example, the device may comprise: one or more processors; and one or more memories operably connectable to the one or more processors and storing instructions may be proposed. For example, the one or more processors may execute the instructions to: obtain information related to a resource pool; obtain a sidelink, SL, discontinuous reception, DRX, configuration related to a second UE; trigger resource selection for an initial transmission resource and at least one retransmission resource, in the resource pool; determine a resource selection window for the resource selection; measuring channel busy ratio, CBR, for the resource pool; determine a number of resources to be included within a time interval during which a first timer related to an active time, included in the SL DRX configuration is running, based on the CBR; and select the initial transmission resource and the at least one retransmission resource in the resource selection window, based on the number of the resources to be included within the time interval during which the first timer related to an active time is running.

According to an embodiment of the present disclosure, a non-transitory computer-readable storage medium storing instructions may be proposed. For example, when executed, the instructions may cause a first device to: obtain information related to a resource pool; obtain a sidelink, SL, discontinuous reception, DRX, configuration related to a second device; trigger resource selection for an initial transmission resource and at least one retransmission resource, in the resource pool; determine a resource selection window for the resource selection; measuring channel busy ratio, CBR, for the resource pool; determine a number of resources to be included within a time interval during which a first timer related to an active time, included in the SL DRX configuration is running, based on the CBR; and select the initial transmission resource and the at least one retransmission resource in the resource selection window, based on the number of the resources to be included within the time interval during which the first timer related to an active time is running.

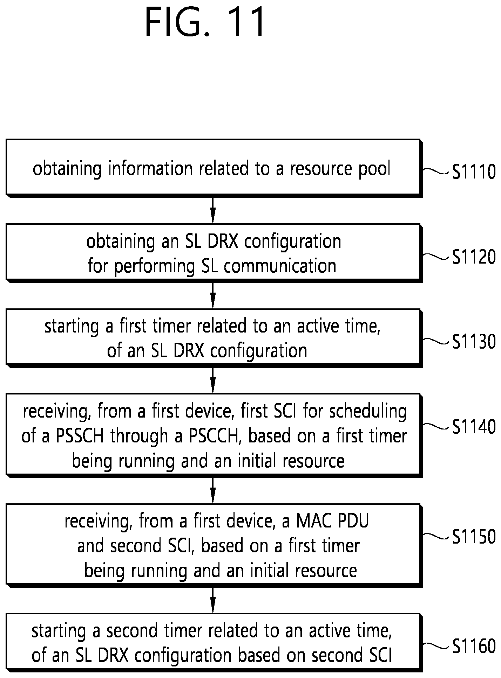

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may obtain information related to a resource pool. In step S1120, the second device may obtain a sidelink, SL, discontinuous reception, DRX, configuration for performing SL communication. In step S1130, the second device may start a first timer related to an active time, of the SL DRX configuration. In step S1140, the second device may receive, from a first device, first sidelink control information, SCI, for scheduling of a physical sidelink shared channel, PSSCH, through a physical sidelink control channel, PSCCH, based on the first timer being running and an initial transmission resource. In step S1150, the second device may receive, from the second device, a medium access control (MAC) protocol data unit (PDU) and second SCI, based on the first timer being running and the initial transmission resource. In step S1160, the second device may start a second timer related to an active time, of the SL DRX configuration based on the second SCI. For example, the initial transmission resource and at least one retransmission resource may be selected based on a number of resources to be included within a time interval during which the first timer is running, and the number of resources to be included within the time interval during which the first timer is running may be determined based on channel busy ratio, CBR, for the resource pool.

For example, the first timer may be an on-duration timer.

The embodiments described above may be applied to various devices described below. First, a processor 202 of a second device 200 may obtain information related to a resource pool. And, the processor 202 of the second device 200 may obtain a sidelink, SL, discontinuous reception, DRX, configuration for performing SL communication. And, the processor 202 of the second device 200 may start a first timer related to an active time, of the SL DRX configuration. And, the processor 202 of the second device 200 may control a transceiver 206 to receive, from a first device 100, first sidelink control information, SCI, for scheduling of a physical sidelink shared channel, PSSCH, through a physical sidelink control channel, PSCCH, based on the first timer being running and an initial transmission resource. And, the processor 202 of the second device 200 may control the transceiver 206 to receive, from the first device 100, a medium access control (MAC) protocol data unit (PDU) and second SCI, based on the first timer being running and the initial transmission resource. And, the processor 202 of the second device 200 may start a second timer related to an active time, of the SL DRX configuration based on the second SCI. For example, the initial transmission resource and at least one retransmission resource may be selected based on a number of resources to be included within a time interval during which the first timer is running, and the number of resources to be included within the time interval during which the first timer is running may be determined based on channel busy ratio, CBR, for the resource pool.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain information related to a resource pool; obtain a sidelink, SL, discontinuous reception, DRX, configuration for performing SL communication; start a first timer related to an active time, of the SL DRX configuration; receive, from a first device, first sidelink control information, SCI, for scheduling of a physical sidelink shared channel, PSSCH, through a physical sidelink control channel, PSCCH, based on the first timer being running and an initial transmission resource; receive, from the first device, a medium access control (MAC) protocol data unit (PDU) and second SCI, based on the first timer being running and the initial transmission resource; and start a second timer related to an active time, of the SL DRX configuration based on the second SCI, wherein the initial transmission resource and at least one retransmission resource may be selected based on a number of resources to be included within a time interval during which the first timer is running, and wherein the number of resources to be included within the time interval during which the first timer is running may be determined based on channel busy ratio, CBR, for the resource pool.

For example, the first timer may be an on-duration timer.

Various embodiments of the present disclosure may be combined with each other.

Devices to which various embodiments of the present disclosure may be applied are described below.

Although not limited thereto, the various descriptions, features, procedures, suggestions, methods, and/or flowcharts of operation disclosed herein may be applied to various fields requiring wireless communication/connectivity (e.g., 5G) between devices.

Hereinafter, it is more specifically described with reference to the drawings. In the following drawings/descriptions, the same drawing symbols may refer to the same or corresponding hardware blocks, software blocks, or functional blocks, unless otherwise indicated.

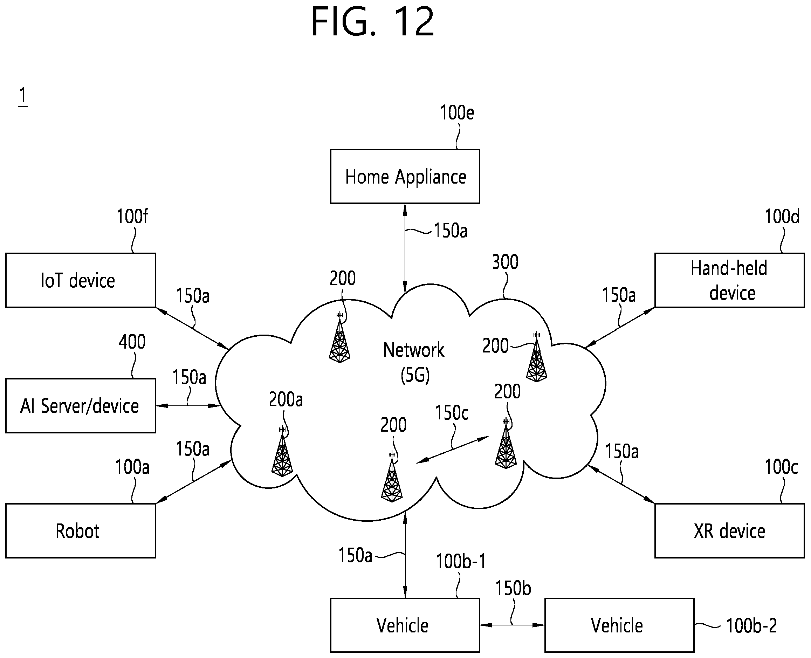

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

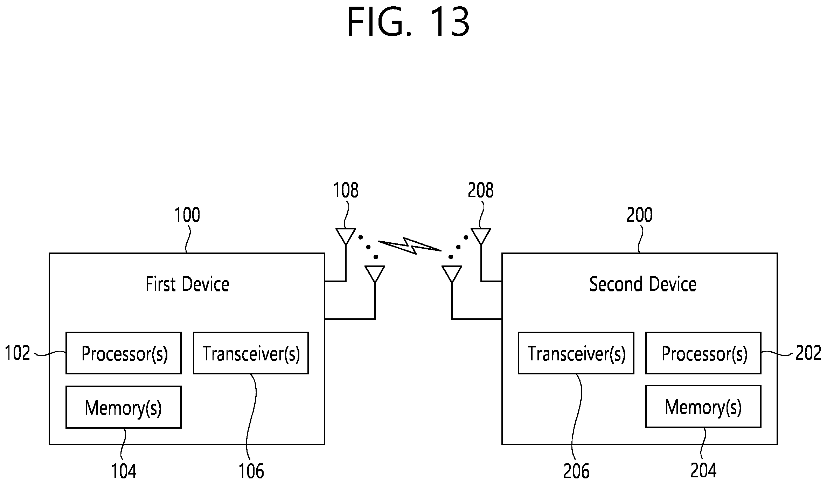

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

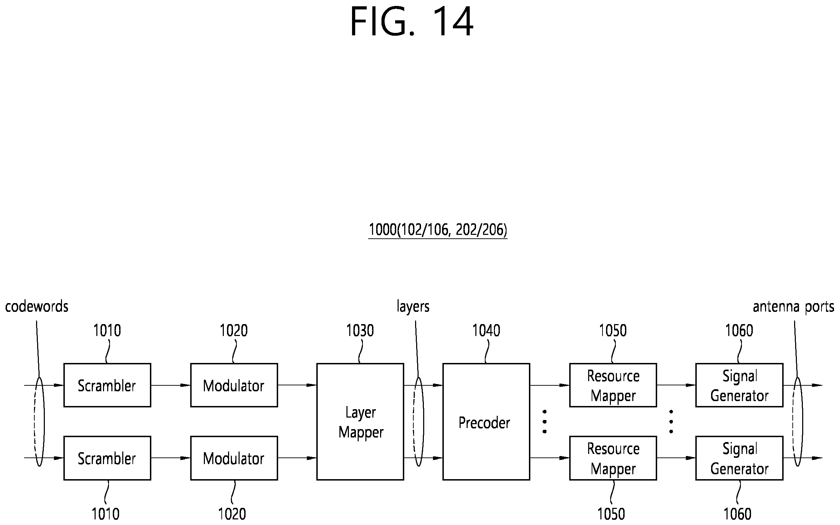

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

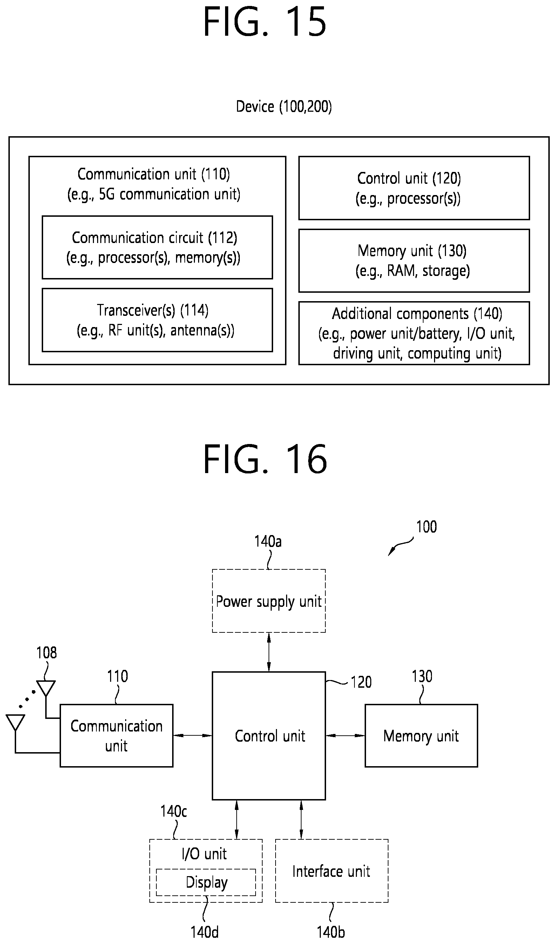

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

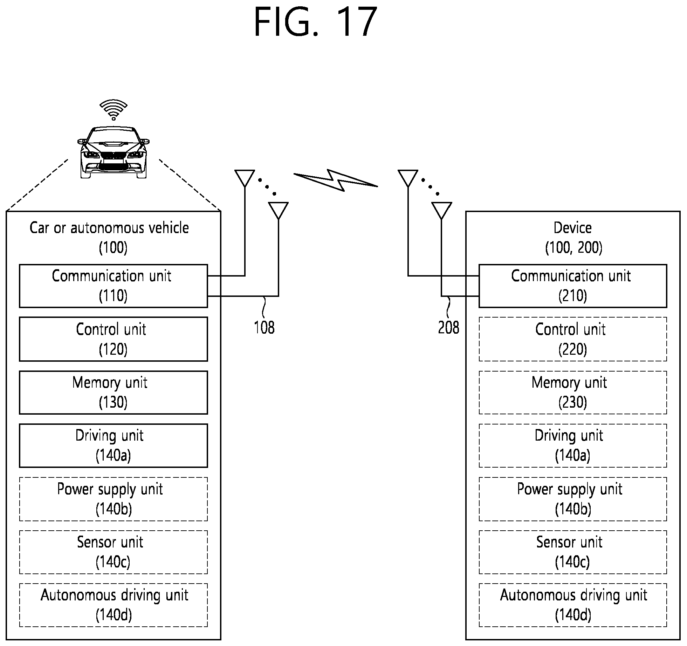

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

## Claims

1. A method for performing, by a first device, wireless communication, the method comprising:
obtaining information related to a resource pool;
obtaining a sidelink, SL, discontinuous reception, DRX, configuration related to a second device;
triggering resource selection for an initial transmission resource and at least one retransmission resource, in the resource pool;
determining a resource selection window for the resource selection;
measuring channel busy ratio, CBR, for the resource pool;
determining a number of resources to be included within a time interval during which a first timer related to an active time, included in the SL DRX configuration is running, based on the CBR; and
selecting the initial transmission resource and the at least one retransmission resource in the resource selection window, based on the number of the resources to be included within the time interval during which the first timer related to an active time is running.

2. The method of claim 1, wherein a resource which is not a resource to be included within the time interval during which the first timer related to an active time is running, among the initial transmission resource and the at least one retransmission resource is selected from a future active time interval.

3. The method of claim 2, wherein the future active time interval includes a time interval during which a second timer related to an active time is to operate, based on an SL transmission performed based on the initial transmission resource or the at least one retransmission resource.

4. The method of claim 2, wherein the future active time interval is a time interval during which a second timer related to an active time is to operate, based on an SL transmission performed based on the initial transmission resource or the at least one retransmission resource, excluding the time interval during which the first timer related to an active time is running.

5. The method of claim 1, wherein the resource selection is related to a transmission of a medium access control, MAC, protocol data unit, PDU.

6. The method of claim 5, wherein determining the number of resources to be included within the time interval during which the first timer related to an active time is running includes:
adjusting the number of resources to be included within the time interval during which the first timer related to an active time is running, based on packet delay budget, PDB, related to the MAC PDU being less than or equal to a threshold value.

7. The method of claim 5, wherein determining the number of resources to be included within the time interval during which the first timer related to an active time is running includes:
adjusting the number of resources to be included within the time interval during which the first timer related to an active time is running, based on a priority related to the MAC PDU.

8. The method of claim 5, wherein determining the number of resources to be included within the time interval during which the first timer related to an active time is running includes:
adjusting the number of resources to be included within the time interval during which the first timer related to an active time is running, based on a minimum transmission distance related to the MAC PDU.

9. The method of claim 1, wherein the first timer related to an active time is an SL DRX on-duration timer.

10. The method of claim 9, wherein determining the number of resources to be included within the time interval during which the first timer related to an active time is running includes:
adjusting the number of resources to be included within the time interval during which the first timer related to an active time is running, based on ratio of a length of the resource selection window to a length of an interval by which the SL DRX on-duration timer runs.

11. The method of claim 9, wherein at least one resource is selected from the interval by which the SL DRX on-duration timer runs by the number of resources to be included within the time interval during which the SL DRX on-duration timer is running, and
wherein a resource which is not the at least one resource selected from the time interval during which the SL DRX on-duration timer is running, among the initial transmission resource and the at least one retransmission resource is selected from a future active time interval.

12. The method of claim 11, wherein the future active time interval includes a time interval during which a second timer related to an active time is to operate, based on an SL transmission performed based on the initial transmission resource or the at least one retransmission resource.

13. The method of claim 11, wherein the future active time interval is a time interval during which a second timer related to an active time is to operate, based on an SL transmission performed based on the initial transmission resource or the at least one retransmission resource, excluding the time interval during which the first timer related to an active time is running.

14. A first device for performing wireless communication, the first device comprising:
one or more memories storing instructions; and
one or more processors connected to the one or more memories, wherein the one or more processors execute the instructions to:
obtain information related to a resource pool;
obtain a sidelink, SL, discontinuous reception, DRX, configuration related to a second device;
trigger resource selection for an initial transmission resource and at least one retransmission resource, in the resource pool;
determine a resource selection window for the resource selection;
measuring channel busy ratio, CBR, for the resource pool;
determine a number of resources to be included within a time interval during which a first timer related to an active time, included in the SL DRX configuration is running, based on the CBR; and
select the initial transmission resource and the at least one retransmission resource in the resource selection window, based on the number of the resources to be included within the time interval during which the first timer related to an active time is running.

15. The first device of claim 14, further comprising one or more transceivers controlled by the one or more processors.

## Patentansprüche

1. Verfahren zur Durchführung einer drahtlosen Kommunikation durch eine erste Vorrichtung, wobei das Verfahren Folgendes umfasst:
Erhalten von Informationen, die sich auf einen Ressourcenpool beziehen;
Erhalten einer Sidelink, SL,- diskontinuierlichen Empfangs, DRX,-Konfiguration, die sich auf eine zweite Vorrichtung bezieht;
Auslösen der Ressourcenauswahl für eine anfängliche Übertragungsressource und mindestens eine Wiederübertragungsressource im Ressourcenpool;
Bestimmen eines Ressourcenauswahlfensters für die Ressourcenauswahl;
Messen der Kanalbelegungsrate, CBR, für den Ressourcenpool;
Bestimmen einer Anzahl von Ressourcen, die innerhalb eines Zeitintervalls eingeschlossen werden sollen, in dem ein erster Timer, der sich auf eine aktive Zeit bezieht, läuft, der in der SL-DRX-Konfiguration enthalten ist, basierend auf dem CBR; und
Auswählen der anfänglichen Übertragungsressource und der mindestens einen Wiederübertragungsressource im Ressourcenauswahlfenster basierend auf der Anzahl der Ressourcen, die innerhalb des Zeitintervalls eingeschlossen werden sollen, in dem der erste Timer, der sich auf eine aktive Zeit bezieht, läuft.

2. Verfahren nach Anspruch 1, wobei eine Ressource, bei der es sich nicht um eine Ressource handelt, die innerhalb des Zeitintervalls, in dem der erste Timer, der sich auf eine aktive Zeit bezieht, läuft, unter der anfänglichen Übertragungsressource und der mindestens einen Wiederübertragungsressource aus einem zukünftigen aktiven Zeitintervall ausgewählt wird.

3. Verfahren nach Anspruch 2, wobei das zukünftige aktive Zeitintervall ein Zeitintervall enthält, in dem ein zweiter Timer, der sich auf eine aktive Zeit bezieht, arbeiten soll, basierend auf einer SL-Übertragung, die basierend auf der anfänglichen Übertragungsressource oder der mindestens einen Wiederübertragungsressource durchgeführt wird.

4. Verfahren nach Anspruch 2, wobei das zukünftige aktive Zeitintervall ein Zeitintervall ist, in dem ein zweiter Timer, der sich auf eine aktive Zeit bezieht, arbeiten soll, basierend auf einer SL-Übertragung, die basierend auf der anfänglichen Übertragungsressource oder der mindestens einen Wiederübertragungsressource durchgeführt wird, mit Ausnahme des Zeitintervalls, in dem der erste Timer, der sich auf eine aktive Zeit bezieht, läuft.

5. Verfahren nach Anspruch 1, wobei sich die Ressourcenauswahl auf eine Übertragung einer Medienzugriffskontrolle, MAC,-Protokolldateneinheit, PDU, bezieht.

6. Verfahren nach Anspruch 5, wobei das Bestimmen der Anzahl der Ressourcen, die innerhalb des Zeitintervalls eingeschlossen werden sollen, in dem der erste Timer, der sich auf eine aktive Zeit bezieht, läuft, enthält:
Anpassen der Anzahl der Ressourcen, die in das Zeitintervall eingeschlossen werden sollen, in dem der erste Timer, der sich auf eine aktive Zeit bezieht, läuft, basierend auf dem Paketverzögerungsbudget, PDB, das sich darauf bezieht, dass die MAC-PDU kleiner oder gleich einem Schwellenwert ist.

7. Verfahren nach Anspruch 5, wobei das Bestimmen der Anzahl der Ressourcen, die innerhalb des Zeitintervalls eingeschlossen werden sollen, in dem der erste Timer, der sich auf eine aktive Zeit bezieht, läuft, enthält:
Anpassen der Anzahl der Ressourcen, die in das Zeitintervall eingeschlossen werden sollen, in dem der erste Timer, der sich auf eine aktive Zeit bezieht, läuft, basierend auf einer Priorität, die sich auf die MAC-PDU bezieht.

8. Verfahren nach Anspruch 5, wobei das Bestimmen der Anzahl der Ressourcen, die innerhalb des Zeitintervalls eingeschlossen werden sollen, in dem der erste Timer, der sich auf eine aktive Zeit bezieht, läuft, enthält:
Anpassen der Anzahl der Ressourcen, die in das Zeitintervall eingeschlossen werden sollen, in dem der erste Timer, der sich auf eine aktive Zeit bezieht, läuft, basierend auf einer minimalen Übertragungsstrecke, die sich auf die MAC-PDU bezieht.

9. Verfahren nach Anspruch 1, wobei der erste Timer, der sich auf eine aktive Zeit bezieht, ein SL-DRX-Einschaltdauer-Timer ist.

10. Verfahren nach Anspruch 9, wobei das Bestimmen der Anzahl der Ressourcen, die innerhalb des Zeitintervalls eingeschlossen werden sollen, in dem der erste Timer, der sich auf eine aktive Zeit bezieht, läuft, Folgendes enthält:
Anpassen der Anzahl der Ressourcen, die in das Zeitintervall eingeschlossen werden sollen, in dem der erste Timer, der sich auf eine aktive Zeit bezieht, läuft, basierend auf dem Verhältnis einer Länge des Ressourcenauswahlfensters zu einer Länge eines Intervalls, in dem der SL-DRX-Einschaltdauer-Timer läuft.

11. Verfahren nach Anspruch 9, wobei mindestens eine Ressource aus dem Intervall, in dem der SL-DRX-Einschaltdauer-Timer läuft, durch die Anzahl der Ressourcen ausgewählt wird, die innerhalb des Zeitintervalls, in dem der SL-DRX-Einschaltdauer-Timer läuft, eingeschlossen werden sollen, und
wobei eine Ressource, bei der es sich nicht um mindestens eine Ressource handelt, die aus dem Zeitintervall ausgewählt wird, in dem der SL-DRX-Einschaltdauer-Timer läuft, unter der anfänglichen Übertragungsressource und der mindestens einen Wiederübertragungsressource aus einem zukünftigen aktiven Zeitintervall ausgewählt wird.

12. Verfahren nach Anspruch 11, wobei das zukünftige aktive Zeitintervall ein Zeitintervall enthält, in dem ein zweiter Timer, der sich auf eine aktive Zeit bezieht, arbeiten soll, basierend auf einer SL-Übertragung, die basierend auf der anfänglichen Übertragungsressource oder der mindestens einen Wiederübertragungsressource durchgeführt wird.

13. Verfahren nach Anspruch 11, wobei das zukünftige aktive Zeitintervall ein Zeitintervall ist, in dem ein zweiter Timer, der sich auf eine aktive Zeit bezieht, arbeiten soll, basierend auf einer SL-Übertragung, die basierend auf der anfänglichen Übertragungsressource oder der mindestens einen Wiederübertragungsressource durchgeführt wird, mit Ausnahme des Zeitintervalls, in dem der erste Timer, der sich auf eine aktive Zeit hezieht, läuft.

14. Erste Vorrichtung zum Durchführen einer drahtlosen Kommunikation, wobei die erste Vorrichtung Folgendes umfasst:
einen oder mehrere Speicher, die Anweisungen speichern; und
einen oder mehrere Prozessoren, die mit dem einen oder den mehreren Speichern verbunden sind, wobei der eine oder die mehreren Prozessoren die Anweisungen ausführen zum:
Erhalten von Informationen, die sich auf einen Ressourcenpool beziehen;
Erhalten einer Sidelink, SL,- diskontinuierlichen Empfangs, DRX,-Konfiguration, die sich auf eine zweite Vorrichtung bezieht;
Auslösen der Ressourcenauswahl für eine anfängliche Übertragungsressource und mindestens eine Wiederübertragungsressource im Ressourcenpool;
Bestimmen eines Ressourcenauswahlfensters für die Ressourcenauswahl;
Messen der Kanalbelegungsrate, CBR, für den Ressourcenpool;
Bestimmen einer Anzahl von Ressourcen, die innerhalb eines Zeitintervalls eingeschlossen werden sollen, in dem ein erster Timer, der sich auf eine aktive Zeit bezieht, läuft, der in der SL-DRX-Konfiguration enthalten ist, basierend auf dem CBR; und
Auswählen der anfänglichen Übertragungsressource und der mindestens einen Wiederübertragungsressource im Ressourcenauswahlfenster basierend auf der Anzahl der Ressourcen, die innerhalb des Zeitintervalls eingeschlossen werden sollen, in dem der erste Timer, der sich auf eine aktive Zeit bezieht, läuft.

15. Erste Vorrichtung nach Anspruch 14, die ferner einen oder mehrere Transceiver umfasst, die von dem einen oder den mehreren Prozessoren gesteuert werden.

## Revendications

1. Procédé de réalisation, par un premier dispositif, d'une communication sans fil, le procédé comprenant :
une obtention d'informations liées à un pool de ressources ;
une obtention d'une configuration de réception discontinue, DRX, de liaison latérale, SL, relative à un second dispositif ;
un déclenchement d'une sélection de ressource pour une ressource de transmission initiale et au moins une ressource de retransmission, dans le pool de ressources ;
une détermination d'une fenêtre de sélection de ressource pour la sélection de ressource ;
une mesure d'un taux d'occupation de canal, CBR, pour le pool de ressources ;
une détermination d'un nombre de ressources à inclure dans un intervalle de temps pendant lequel un premier minuteur relatif à un temps actif, inclus dans la configuration DRX SL est en cours d'exécution, sur la base du CBR ; et
une sélection de la ressource de transmission initiale et de l'au moins une ressource de retransmission dans la fenêtre de sélection de ressource, sur la base du nombre de ressources à inclure dans l'intervalle de temps pendant lequel le premier minuteur relatif à un temps actif est en cours d'exécution.

2. Procédé selon la revendication 1, dans lequel une ressource qui n'est pas une ressource à inclure dans l'intervalle de temps pendant lequel le premier minuteur relatif à un temps actif est en cours d'exécution, parmi la ressource de transmission initiale et l'au moins une ressource de retransmission est sélectionnée à partir d'un intervalle de temps actif futur.

3. Procédé selon la revendication 2, dans lequel l'intervalle de temps actif futur inclut un intervalle de temps pendant lequel un second minuteur relatif à un temps actif doit fonctionner, sur la base d'une transmission SL réalisée sur la base de la ressource de transmission initiale ou de l'au moins une ressource de retransmission.

4. Procédé selon la revendication 2, dans lequel l'intervalle de temps actif futur est un intervalle de temps pendant lequel un second minuteur relatif à un temps actif doit fonctionner, sur la base d'une transmission SL réalisée sur la base de la ressource de transmission initiale ou de l'au moins une ressource de retransmission, à l'exclusion de l'intervalle de temps pendant lequel le premier minuteur relatif à un temps actif est en cours d'exécution.

5. Procédé selon la revendication 1, dans lequel la sélection de ressources est relative à une transmission d'une unité de données de protocole, PDU, de contrôle d'accès au support, MAC.

6. Procédé selon la revendication 5, dans lequel la détermination du nombre de ressources à inclure dans l'intervalle de temps pendant lequel le premier minuteur relatif à un temps actif est en cours d'exécution inclut :
un ajustement du nombre de ressources à inclure dans l'intervalle de temps pendant lequel le premier minuteur relatif à un temps actif est en cours d'exécution, sur la base du fait qu'un budget de retard de paquet, PDB, relatif à la PDU MAC est inférieur ou égal à une valeur seuil.

7. Procédé selon la revendication 5, dans lequel la détermination du nombre de ressources à inclure dans l'intervalle de temps pendant lequel le premier minuteur relatif à un temps actif est en cours d'exécution inclut :
un ajustement du nombre de ressources à inclure dans l'intervalle de temps pendant lequel le premier minuteur relatif à un temps actif est en cours d'exécution, sur la base d'une priorité liée à la PDU MAC.

8. Procédé selon la revendication 5, dans lequel la détermination du nombre de ressources à inclure dans l'intervalle de temps pendant lequel le premier minuteur relatif à un temps actif est en cours d'exécution inclut :
un ajustement du nombre de ressources à inclure dans l'intervalle de temps pendant lequel le premier minuteur relatif à un temps actif est en cours d'exécution, sur la base d'une distance d'émission minimale liée à la PDU MAC.

9. Procédé selon la revendication 1, dans lequel le premier minuteur relatif à un temps actif est un minuteur de durée d'activation DRX SL.

10. Procédé selon la revendication 9, dans lequel la détermination du nombre de ressources à inclure dans l'intervalle de temps pendant lequel le premier minuteur relatif à un temps actif est en cours d'exécution inclut :
un ajustement du nombre de ressources à inclure dans l'intervalle de temps pendant lequel le premier minuteur relatif à un temps actif est en cours d'exécution, sur la base d'un rapport d'une longueur de la fenêtre de sélection de ressource sur une longueur d'un intervalle pendant lequel le minuteur de durée d'activation DRX SL est en cours d'exécution.

11. Procédé selon la revendication 9, dans lequel au moins une ressource est sélectionnée à partir de l'intervalle pendant lequel le minuteur de durée d'activation DRX SL s'exécute par le nombre de ressources à inclure dans l'intervalle de temps pendant lequel le minuteur de durée d'activation DRX SL est en cours d'exécution, et
dans lequel une ressource qui n'est pas l'au moins une ressource sélectionnée dans l'intervalle de temps pendant lequel le minuteur de durée d'activation DRX SL est en cours d'exécution, parmi la ressource de transmission initiale et l'au moins une ressource de retransmission est sélectionnée dans un intervalle de temps actif futur.

12. Procédé selon la revendication 11, dans lequel l'intervalle de temps actif futur inclut un intervalle de temps pendant lequel un second minuteur relatif à un temps actif doit fonctionner, sur la base d'une transmission SL réalisée sur la base de la ressource de transmission initiale ou de l'au moins une ressource de retransmission.

13. Procédé selon la revendication 11, dans lequel l'intervalle de temps actif futur est un intervalle de temps pendant lequel un second minuteur relatif à un temps actif doit fonctionner, sur la base d'une transmission SL réalisée sur la base de la ressource de transmission initiale ou de l'au moins une ressource de retransmission, à l'exclusion de l'intervalle de temps pendant lequel le premier minuteur relatif à un temps actif est en cours d'exécution.

14. Premier dispositif pour la réalisation d'une communication sans fil, le premier dispositif comprenant :
une ou plusieurs mémoires stockant des instructions ; et
un ou plusieurs processeurs connectés aux une ou plusieurs mémoires, dans lequel les un ou plusieurs processeurs exécutent les instructions pour :
obtenir des informations relatives à un pool de ressources ;
obtenir une configuration de réception discontinue, DRX, de liaison latérale, SL ;
déclencher une sélection de ressource pour une ressource de transmission initiale et au moins une ressource de retransmission, dans le pool de ressources ;
déterminer une fenêtre de sélection de ressource pour la sélection de ressources ;
mesurer un taux d'occupation de canal, CBR, pour le pool de ressources ;
déterminer un nombre de ressources à inclure dans un intervalle de temps pendant lequel un premier minuteur relatif à un temps actif, inclus dans la configuration DRX SL est en cours d'exécution, sur la base du CBR ; et
sélectionner la ressource de transmission initiale et l'au moins une ressource de retransmission dans la fenêtre de sélection de ressource, sur la base du nombre de ressources à inclure dans l'intervalle de temps pendant lequel le premier minuteur relatif à un temps actif est en cours d'exécution.

15. Premier dispositif selon la revendication 14, comprenant en outre un ou plusieurs émetteurs-récepteurs commandés par les un ou plusieurs processeurs.
